# EUROPEAN PATENT APPLICATION

(11) **EP 2 252 044 A2**
(43) Date of publication of application: **17.11.2010**
(21) Application number: 10159838.1
(22) Date of filing: 14.04.2010
(51) Int. Cl.: H04N 1/00, G01C 21/00

(54) **Electronic apparatus, display controlling method and program**

(30) Priority: 21.04.2009 JP 2009102525
(71) Applicant: Sony Corporation, Tokyo 108-0075 (JP)
(72) Inventor: Fujimoto, Eisuke, Tokyo 108-0075 (JP); Kuwabara, Takashi, Tokyo 108-0075 (JP); Aridome, Kenichiro, Tokyo 108-0075 (JP); Yamaji, Yoshio, Tokyo 108-0075 (JP)
(74) Representative: Körber, Martin Hans

(57) **Abstract**

An electronic apparatus includes an image-capturing direction acquiring unit that acquires an image-capturing direction as a direction in which an object included in a captured image exists based on an image-capturing position during the image-capturing of the captured image, a converting unit that converts a map including the image-capturing position so that the acquired image-capturing direction on the map corresponds with a specific direction on a display plane where the map is displayed, and a display controlling unit that causes the display of the converted map in association with the captured image.

## Description

### BACKGROUND OF THE INVENTION

### 1. Field of the Invention

The present invention relates to an electronic apparatus, and particularly to an electronic apparatus and a display controlling method causing the display of a map, and a program causing a computer to execute the method.

### 2. Description of the Related Art

In the related art, there is an electronic apparatus capable of displaying a map of each of regions by using map data stored in a map database or the like. In addition, an electronic apparatus has been suggested which displays a map and an image relating to each of positions on the map.

For example, an image processing apparatus has been suggested which displays a bird's eye view image and a panoramic image by arranging part of the panoramic image on the photographing site of the panoramic image in the bird's eye view image (for example, refer to Japanese Unexamined Patent Application Publication No. 2007-110675 (Fig. 32)).

### SUMMARY OF THE INVENTION

According to the related art described above, it is possible to easily grasp the relationship of geographical position of a panoramic image by arranging the panoramic image on the photographing site of the panoramic image in the bird's eye view image.

Here, for example, when a user performs an image-capturing operation with an image-capturing apparatus, not only the positional relationship but also the image-capturing direction are important factors. For example, even when an image-capturing operation is performed at the same position, an object can be seen substantially differently depending on the image-capturing direction, and therefore, it is important to grasp the image-capturing position and the image-capturing direction during image-capturing. In addition, even when content recorded at the same position is reproduced, the object can be seen substantially differently depending on the image-capturing direction, and therefore, it is important to grasp the image-capturing position and the image-capturing direction during image capture.

It is desirable to easily grasp the image-capturing position and image-capturing direction of an image on a map.

According to an embodiment of the present invention, there are provided with an electronic apparatus including an image-capturing direction acquiring unit that acquires an image-capturing direction as a direction in which an object included in a captured image exists based on an image-capturing position during the image-capturing of the captured image, a converting unit that converts a map including the image-capturing position so that the acquired image-capturing direction on the map corresponds with a specific direction on a display plane where the map is displayed, and a display controlling unit that causes the display of the converted map in association with the captured image, a display controlling method thereof, and a program causing a computer to execute the method. Accordingly, it is achieved that an image-capturing direction is acquired, the map is converted so that the image-capturing direction on the map including the image-capturing position during the image-capturing of the captured image corresponds with a specific direction, and the converted map is displayed in association with the captured image.

In addition, according to the embodiment of the present invention, the electronic apparatus includes a representative image storing unit that stores representative images indicating content formed from the captured image for each of the content, and an operation receiving unit that receives selection operation for selecting a desired representative image from among the representative images stored in the representative image storing unit, and the converting unit may perform the conversion for the map including the image-capturing position during the image-capturing of the selected representative image among the representative images stored in the representative image storing unit, and the display controlling unit may cause the display of a view of the representative images stored in the representative image storing unit and the display of the converted map in association with the selected representative image among the displayed representative images. Accordingly, it is achieved that the map for the selected representative image is converted, and the converted image is displayed in association with the selected representative image among representative images with their view displayed.

In addition, according to the embodiment of the present invention, the converting unit may perform the conversion of the map for each of the captured images including content corresponding to the selected representative image instructed to be reproduced when the reproduction of the content is instructed, and the display controlling unit may cause the display of the converted map in association with captured images for each of the captured images including the content instructed to be reproduced. Accordingly, it is achieved that the map is converted for each of the captured images including the content instructed to be reproduced and the converted map is displayed in association with the captured image for each of the captured image including the content instructed to be reproduced even when the content corresponding to the selected representative image is instructed to be reproduced.

In addition, according to the embodiment of the present invention, the electronic apparatus further includes an image-capturing unit that generates the captured images, and whenever the captured images are generated, the converting unit may perform the conversion for the map including the image-capturing position during the image-capturing of the generated captured images, and whenever the captured images are generated, the display controlling unit may cause the display of the converted map in association with the each of the generated captured images. Accordingly, it is achieved that whenever the captured image is generated, the map is converted for a generated captured image, and whenever the captured image is generated, the converted map is displayed in association with the generated captured image.

In addition, according to the embodiment of the present invention, the electronic apparatus further includes a content storing unit that stores moving image content formed from the captured images, and the converting unit may perform the conversion of the map for each of the captured images including the moving image content instructed to be reproduced when the reproduction of the moving image content is instructed, and the display controlling unit may cause the display of the converted map in association with captured images for each of the captured images including the moving image content. Accordingly, it is achieved that the map is converted for each of the captured images including the moving image content instructed to be reproduced, and the converted map is displayed in association with the captured image for each of the captured images including the moving image content, even when the moving image content is instructed to be reproduced.

In addition, according to the embodiment of the present invention, the converting unit may convert the map by rotating the map taking the image-capturing position as the center of rotation so that the acquired image-capturing direction and the specific direction correspond with each other on the map. Accordingly, it is achieved that the map is converted by rotating the map having the image-capturing position as the center of rotation so that the image-capturing direction on the map and a specific direction correspond with each other.

In addition, according to the embodiment of the present invention, the map may be a three-dimensional map which is formed of a three-dimensional captured image by projecting a three-dimensional space on the map including the image-capturing position onto a plane, the converting unit may convert the three-dimensional map so that the acquired image-capturing direction on the three-dimensional map and a specific direction in a display plane where the three-dimensional map is displayed correspond with each other, and the display controlling unit may cause the display of the converted three-dimensional map in association with the captured image. Accordingly, it is achieved that the three-dimensional map is converted so that the image-capturing direction on the three-dimensional map and a specific direction correspond with each other and the converted three-dimensional map is displayed in association with the captured image.

In addition, according to the embodiment of the present invention, the display controlling unit may cause the display of the map by being superimposed on the captured image. Accordingly, it is achieved that the map is displayed by being superimposed on the captured image.

In addition, according to the embodiment of the present invention, the image-capturing direction acquiring unit may acquire the direction of an object existing in the center position of the captured image as an image-capturing direction based on the image-capturing position. Accordingly, it is achieved that the direction of the object existing at the center position in the captured image as the image-capturing direction based on the image-capturing position.

In addition, according to the embodiment of the present invention, the electronic apparatus further includes angle-of-view and depth information acquiring units that acquire angle-of-view information and depth information during the image-capturing, and the display controlling unit may cause the display of a captured image in an image-capturing range indicating the image-capturing range specified by the acquired angle-of-view information and depth information by being superimposed on the image-capturing position on the map. Accordingly, it is achieved that the angle-of-view information and depth information during the image-capturing are acquired, and the captured image in the image-capturing range indicating the image-capturing range specified by the acquired angle-of-view information and depth information can be displayed by being superimposed on the image-capturing position on the map.

According to the present invention, it is possible to exhibit an excellent effect that an image-capturing position and an image-capturing direction of an image can be easily grasp on a map.

### BRIEF DESCRIPTION OF THE DRAWINGS

Fig. 1 is a block diagram illustrating an example of an internal composition of an image-capturing apparatus according to a first embodiment of the present invention;
Fig. 2 is a block diagram illustrating an example of a functional composition of the image-capturing apparatus according to the first embodiment of the present invention;
Fig. 3 is a diagram schematically illustrating stored content of a content management information storing unit according to the first embodiment of the present invention;
Figs. 4A and 4B are diagrams schematically illustrating part of map data stored in a map data storing unit and an image-capturing operation in a region corresponding to the map data according to the first embodiment of the present invention;
Figs. 5A and 5B are diagrams schematically illustrating a method of calculating a rotation angle used in conversion processing of the map data by a map data converting unit according to the first embodiment of the present invention;
Figs. 6A and 6B are diagrams schematically illustrating a display target region from the map data stored in the map data storing unit according to the first embodiment of the present invention;
Figs. 7A and 7B are diagrams schematically illustrating a method of creating an image-capturing state confirmation image superimposed on a map corresponding to the map data converted by the map data converting unit according to the first embodiment of the present invention;
Figs. 8A and 8B are diagrams illustrating an example of displaying a captured image and a map displayed in a display unit according to the first embodiment of the present invention;
Figs. 9A and 9B are diagrams illustrating an example of displaying part of map data stored in the map data storing unit and a captured image and a map displayed in the display unit according to the first embodiment of the present invention;
Fig. 10 is a block diagram illustrating an example of a functional composition of the image-capturing apparatus according to the first embodiment of the present invention;
Figs. 11A and 11B are diagrams illustrating examples of displaying a content selection screens displayed in the display unit according to the first embodiment of the present invention;
Figs. 12A and 12B are diagrams illustrating examples of displaying content selection screens displayed in the display unit according to the first embodiment of the present invention;
Figs. 13A and 13B are diagrams illustrating examples of playing back content in the display unit according to the first embodiment of the present invention;
Fig. 14 is a flowchart illustrating procedures of a map display control processing by the image-capturing apparatus according to the first embodiment of the present invention;
Fig. 15 is a flowchart illustrating a map data conversion processing in the procedures of the map display control processing by the image-capturing apparatus according to the first embodiment of the present invention;
Fig. 16 is a flowchart illustrating procedures of a map display control processing by the image-capturing apparatus according to the first embodiment of the present invention;
Fig. 17 is a flowchart illustrating procedures of a map display control processing by the image-capturing apparatus according to the first embodiment of the present invention;
Fig. 18 is a flowchart illustrating a content reproduction processing in the procedures of the map display control processing by the image-capturing apparatus according to the first embodiment of the present invention;
Fig. 19 is a block diagram illustrating an example of an internal composition of an image-capturing apparatus according to a second embodiment of the present invention;
Fig. 20 is a block diagram illustrating an example of a functional composition of the image-capturing apparatus according to the second embodiment of the present invention;
Figs. 21A and 21B are diagrams illustrating an image-capturing operation of the image-capturing apparatus and a three-dimensional map displayed in that state according to the second embodiment of the present invention; and
Figs. 22A and 22B are diagrams illustrating an image-capturing operation of the image-capturing apparatus and a three-dimensional map displayed in that state according to the second embodiment of the present invention.

### DESCRIPTION OF THE PREFERRED EMBODIMENTS

Hereinafter, embodiment of the present invention will be described. The description will be provided in the order shown below.
1. First Embodiment (Map display control: An example of displaying a map so that an image-capturing direction during image-capturing and a specific direction on a display plane correspond with each other)
2. Second Embodiment (Map display control: an example of displaying a three-dimensional map so that an image-capturing direction during image-capturing and a specific direction on a display plane correspond with each other)

### First Embodiment

### An example of a composition of an image-capturing apparatus

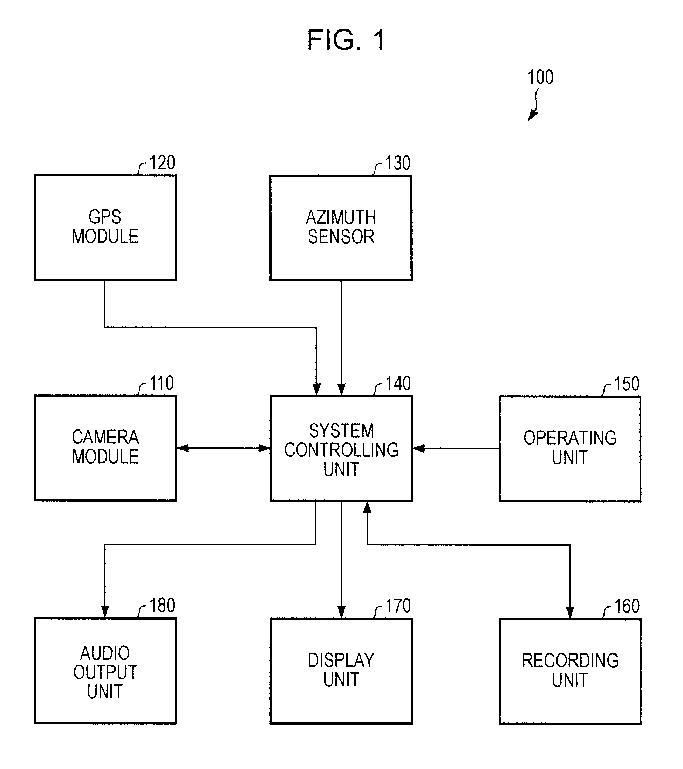

Fig. 1 is a block diagram illustrating an example of an internal composition of an image-capturing apparatus 100 according to a first embodiment of the present invention. The image-capturing apparatus 100 is provided with a camera module 110, a global positioning system (GPS) module 120, an azimuth sensor 130, and a system controlling unit 140. In addition, the image-capturing apparatus 100 also provided with a manipulating unit 150, a recording unit 160, a display unit 170, and an audio output unit 180. The image-capturing apparatus 100 generates, for example, image data by capturing an image of an object, and is realized by image-capturing apparatuses such as a digital still camera or a digital video camera (for example, a camera-integrated recorder) which records the image data as content.

The camera module 110 generates a captured image (image data) by capturing an image of an object, and outputs the generated captured image to the system controlling unit 140. Specifically, the camera module 110 is provided with an optical unit, an imaging device and a signal processing unit. In the camera module 110, an optical image of an object incident through the optical unit forms an image on an imaging plane of the imaging device, the imaging device performs an image-capturing operation in that state, the signal processing unit performs signal processing for imaging signal, and thereby a captured image is generated. In addition, the generated captured image is sequentially output to the system controlling unit 140. Furthermore, the camera module 110 calculates angle-of-view information and depth information when the captured image is generated, and outputs the angle-of-view information and depth information to the system controlling unit 140. Here, the angle-of-view information is a value indicating an angle of view of the generated captured image, and calculated, for example, based on image-capturing range (region) and a focal length on the imaging device during the generation of the captured image. In addition, the depth information data (so-called depth map data) indicating a distance from an image-capturing position (for example, a position of the imaging device) to the object included in the captured image (distance of the object). The depth information may be calculated for each pixel forming the captured image, and may be calculated only for each pixel corresponding to the object which is closest to the focus. As a method of calculating the depth information, for example, time of flight (TOF) method or a method such as analysis of the amount of blur (depth from defocus) can be used. Here, the TOF method is a method of calculating a distance to a target object based on delayed time of light from when the light emitted from a light source is reflected on the object, and arrives at a sensor and the speed of the light.

The GPS module 120 calculates image-capturing position information based on a GPS signal received by a GPS signal receiving antenna (not shown), and outputs the calculated image-capturing position information to the system controlling unit 140. In the calculated image-capturing position information, each of data relating to a position of longitude, latitude, and altitude is included. In addition, in the first embodiment of the present invention, an example of using image-capturing position information calculated based on a GPS signal is shown, but image-capturing position information acquired in another method of acquiring the image-capturing position information may be used. For example, image-capturing position information can be used by drawn the information using access point information by a wireless local area network (LAN) existing environments.

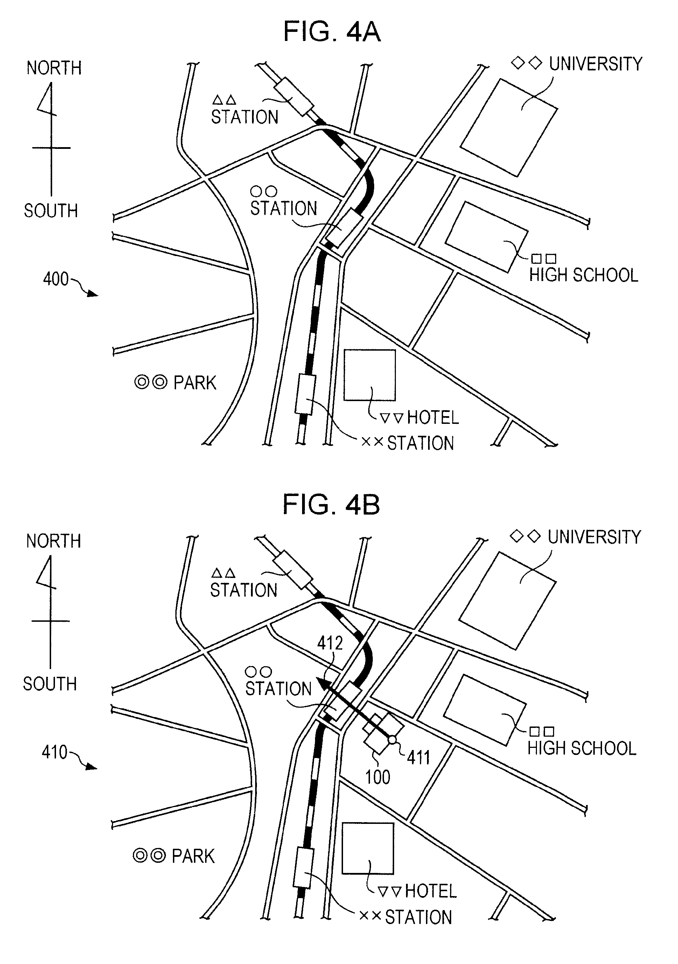

The azimuth sensor 130 is a sensor measuring an azimuth on the earth using geomagnetism, and outputs the measured azimuth to the system controlling unit 140. For example, the azimuth sensor 130 is a magnetic sensor formed from a coil with 2 axes (for example x axis and y axis) perpendicular to each other and a magneto-resistance (MR) element arranged in the center portion thereof. The MR element is an element detecting geomagnetism and a resistance value thereof changes depending on the magnitude of the magnetism, and the change of resistance of the MR element is divided into components of 2 directions (for example, components of x axis and y axis) by the coil with 2 axes, and then an azimuth is calculated based on the proportion of the geomagnetism in the components of 2 directions. Here, in the first embodiment of the present invention, the azimuth sensor 130 measures an azimuth of an image-capturing direction (for example, the direction of the arrow 412 shown in Fig. 4B) of the image-capturing apparatus 100. The image-capturing direction is a direction from the image-capturing position (for example, a position where the image-capturing apparatus 100 exists) to a position where the object included in the captured image generated by the camera module 110 exists, and the direction can be, for example, an optical axis direction in the object side. In addition, for example, the image-capturing direction can be a direction of the object existing in the center position within the captured image based on the image-capturing position. Furthermore, in the first embodiment of the present invention, an example of acquiring the image-capturing direction using the azimuth sensor 130 is shown, but an image-capturing direction acquired by another method of acquiring the image-capturing direction may be used. For example, an azimuth measured based on a GPS signal may be used.

The system controlling unit 140 performs control of the whole the image-capturing apparatus 100. For example, the system controlling unit 140 performs control according to an operation input from a user received by a manipulating unit 150. In addition, the system controlling unit 140 controls display of a content selection screen displayed in the display unit 170 or the like, and recording on or reading from the recording unit 160 of a captured image, or the like. Furthermore, the system controlling unit 140 controls display by the display unit 170 of the captured image generated by the camera module 110 and a map relating to an image-capturing position thereof when a monitoring mode is set or during the recording of a moving image. Here, the monitoring mode is an image-capturing mode for displaying the captured image supplied from the camera module 110 in the display unit 170 in real-time, for example, when the image-capturing apparatus 100 is on standby for image recording.

The manipulating unit 150 is a manipulating input unit receiving an operation input from a user, and outputs a signal to the system controlling unit 140 according to the received operation input.

The recording unit 160 records the captured image generated by the camera module 110 as still image content or moving image content based on the control of the system controlling unit 140. In addition, the recording unit 160 supplies the recorded still image content and moving image content to the system controlling unit 140 based on the control of the system controlling unit 140. Moreover, the recording unit 160 accommodates map data for displaying a map in the display unit 170. Furthermore, the recording unit 160 accommodates content management information for managing the still image content or moving image content. In addition, as the recording unit 160, a recording medium, for example, a flash memory or the like can be used. Moreover, the recording unit 160 may be built in the image-capturing apparatus 100 and detachably mounted in the image-capturing apparatus 100.

The display unit 170 is a display unit for displaying various images based on the control of the system controlling unit 140. For example, the display unit 170 displays the captured image generated by the camera module 110, the still image content or moving image content read out from the recording unit 160, the content selection screen to be provided to a user, or the like. The display unit 170 can use, for example, a liquid crystal display (LCD) or an organic electro luminescence (organic EL).

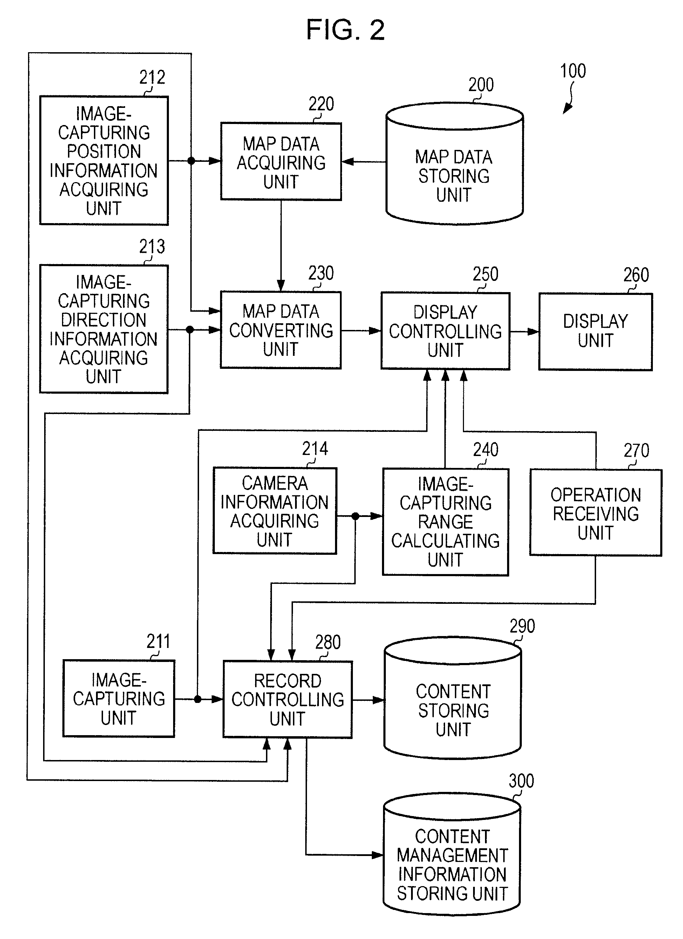

The audio output unit 180 outputs various kinds of audio information based on the control of the system controlling unit 140. The audio output unit 180 can be realized, for example, by a speaker. Fig. 2 is a block diagram illustrating an example of a functional composition of the image-capturing apparatus 100 according to the first embodiment of the present invention. The image-capturing apparatus 100 is provided with a map data storing unit 200, an image-capturing unit 211, an image-capturing position information acquiring unit 212, an image-capturing direction information acquiring unit 213, a camera information acquiring unit 214, and a map data acquiring unit 220. In addition, the image-capturing apparatus 100 is provided with a map data converting unit 230, an image-capturing range calculating unit 240, a display controlling unit 250, a display unit 260, an operation receiving unit 270, a record controlling unit 280, a content storing unit 290, and a content management information storing unit 300.

The map data storing unit 200 stores map data for displaying a map in the display unit 260, and supplies the stored map data to the map data acquiring unit 220. For example, the map data stored in the map data storing unit 200 is data specified by longitude and latitude, and divided into plural regions by units of a predetermined longitude width and latitude width. In addition, the map data storing unit 200 corresponds to the storing unit 160 shown in Fig. 1.

The image-capturing unit 211 generates a captured image by capturing an image of an object, and outputs the generated captured image to the display controlling unit 250 and record controlling unit 280. In addition, the image-capturing unit 211 corresponds to the camera module 110 shown in Fig. 1.

The image-capturing position information acquiring unit 212 acquires image-capturing position information relating to an image-capturing position, and outputs the acquired image-capturing position information to the map data acquiring unit 220, the map data converting unit 230, and the record controlling unit 280. In addition, the image-capturing position information acquiring unit 212 corresponds to the GPS module 120 shown in Fig. 1.

The image-capturing direction information acquiring unit 213 acquires image-capturing direction information relating to an image-capturing direction, and outputs the acquired image-capturing direction information to the map data converting unit 230 and the record controlling unit 280. In addition, the image-capturing direction information acquiring unit 213 corresponds to the azimuth sensor 130 shown in Fig. 1. Moreover, the image-capturing direction information acquiring unit 213 is an example of the image-capturing direction acquiring unit described in the claims of the present invention.

The camera information acquiring unit 214 acquires angle-of-view information and depth information when the captured image is generated, and outputs the acquired angle-of-view information and depth information to the image-capturing range calculating unit 240 and the record controlling unit 280. In addition, the camera information acquiring unit 214 corresponds to the camera module 110 shown in Fig. 1. The camera information acquiring unit 214 is an example of the angle-of-view depth information acquiring unit described in the claims of the present invention.

The map data acquiring unit 220 acquired map data from the map data storing unit 200 based on the image-capturing position information output from the image-capturing position information acquiring unit 212, and outputs the acquired map data to the map data converting unit 230. In addition, the map data acquiring unit 220 corresponds to the system controlling unit 140 shown in Fig. 1.

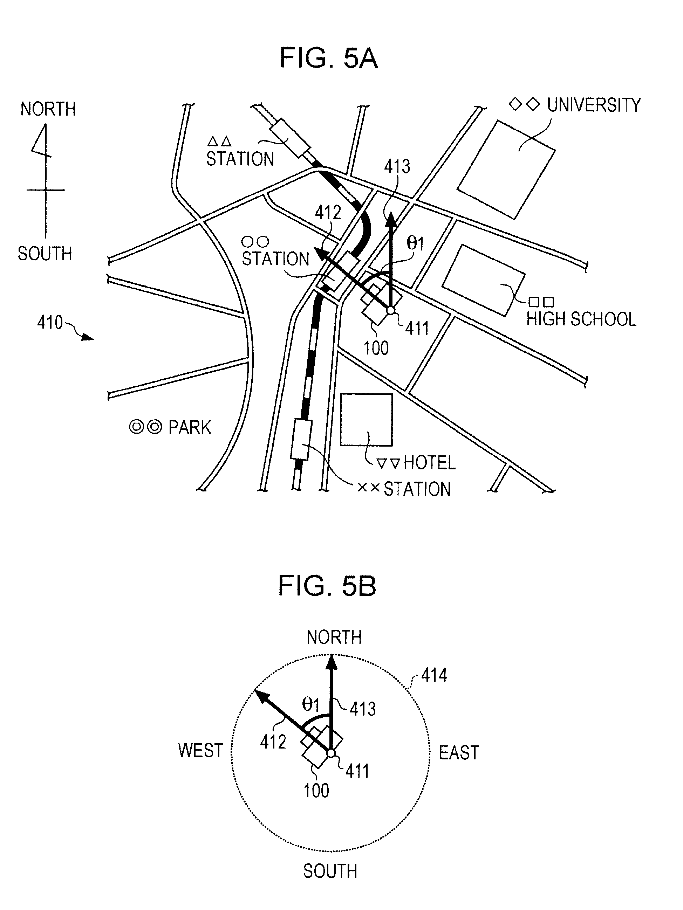

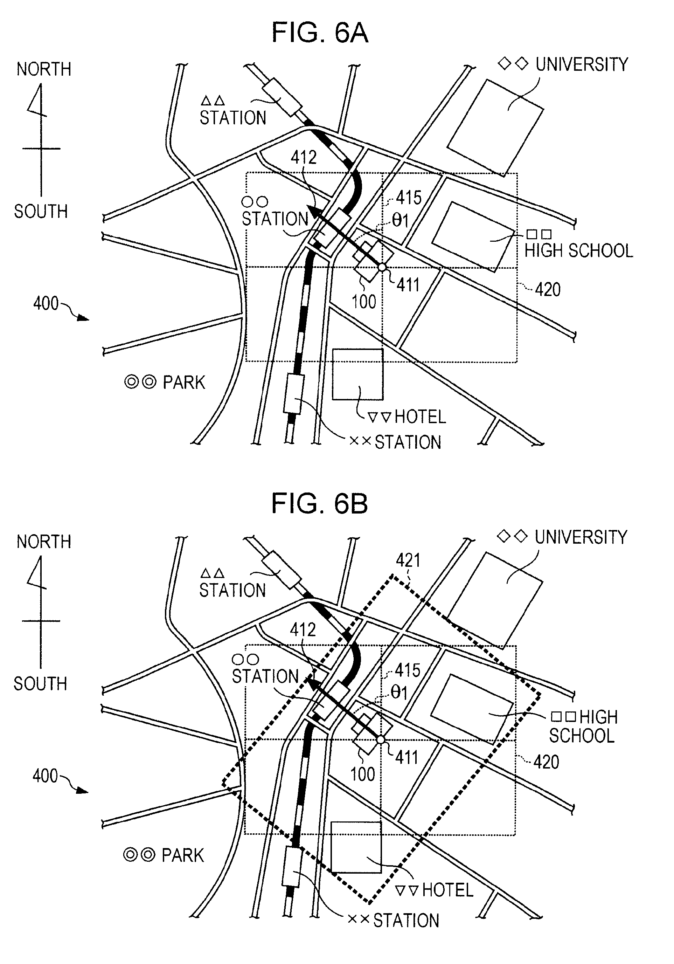

The map data converting unit 230 converts the map data output from the map data acquiring unit 220 based on the image-capturing direction information output from the image-capturing direction information acquiring unit 213, and outputs the converted map data to the display controlling unit 250. Specifically, the map data converting unit 230 converts the map data so that the image-capturing direction in the map corresponding to the map data output from the map data acquiring unit 220 corresponds with a specific direction in the display unit 260. For example, the map data converting unit 230 has the image-capturing position specified by the image-capturing position information output from the image-capturing position information acquiring unit 212 as a base position and performs a rotation processing for the map data output from the map data acquiring unit 220. In this case, the map data converting unit 230 performs the rotation processing for the map data as much as at a rotation angle specified by the image-capturing direction information output from the image-capturing direction information acquiring unit 213. Here, the specific direction can be, for example, an upper direction in the vertical direction of the image in a display plane for displaying the image corresponding to content stored in the content storing unit 290. In addition, the conversion of the map data will be described in detail with respect to Figs. 5A, 5B, 6A, and 6B. Moreover, the map data converting unit 230 corresponds to the system controlling unit 140 shown in Fig. 1. In addition, the map data converting unit 230 is an example of the converting unit described in the claims of the present invention.

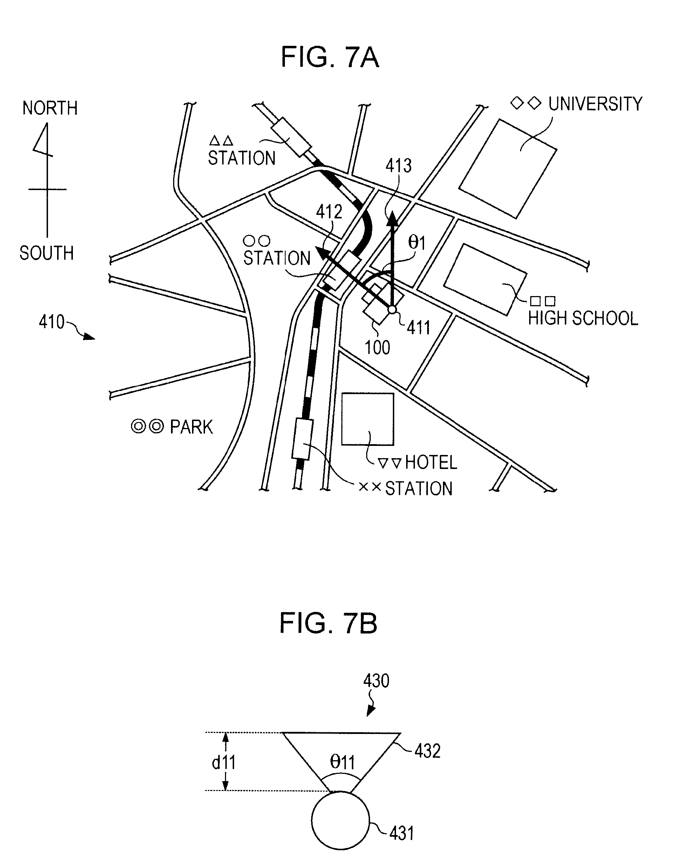

The image-capturing range calculating unit 240 calculates an image-capturing range for creating the image-capturing state confirmation image (shown in Fig. 7B) based on the angle-of-view information and depth information output from the camera information acquiring unit 214, and outputs the calculated image-capturing range to the display controlling unit 250. The calculation of the image-capturing range will be described in detail with reference to Figs. 7A and 7B. In addition, the image-capturing range calculating unit 240 corresponds to the system controlling unit 140 shown in Fig. 1.

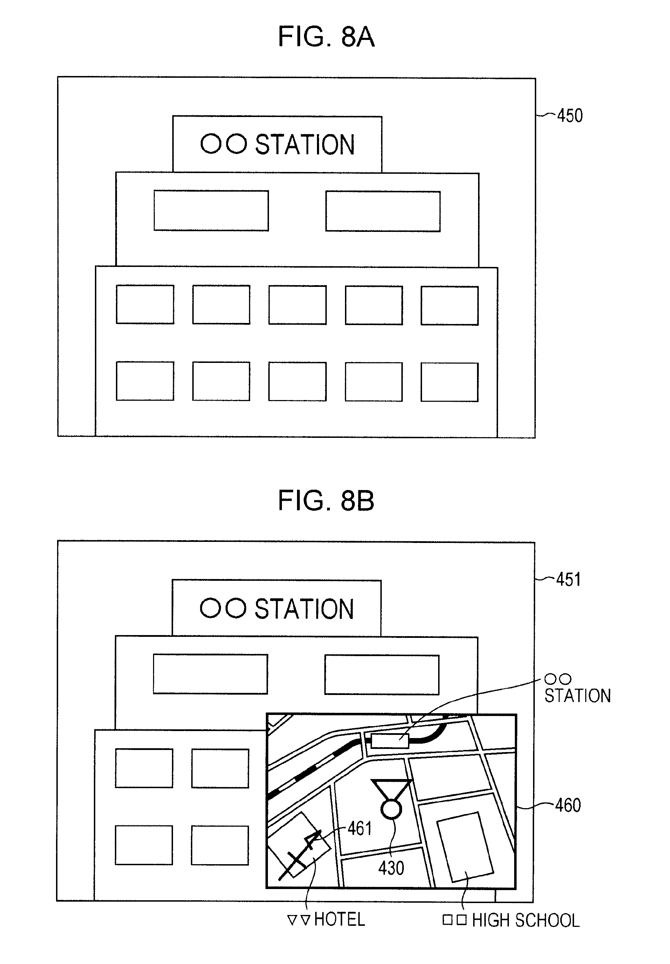

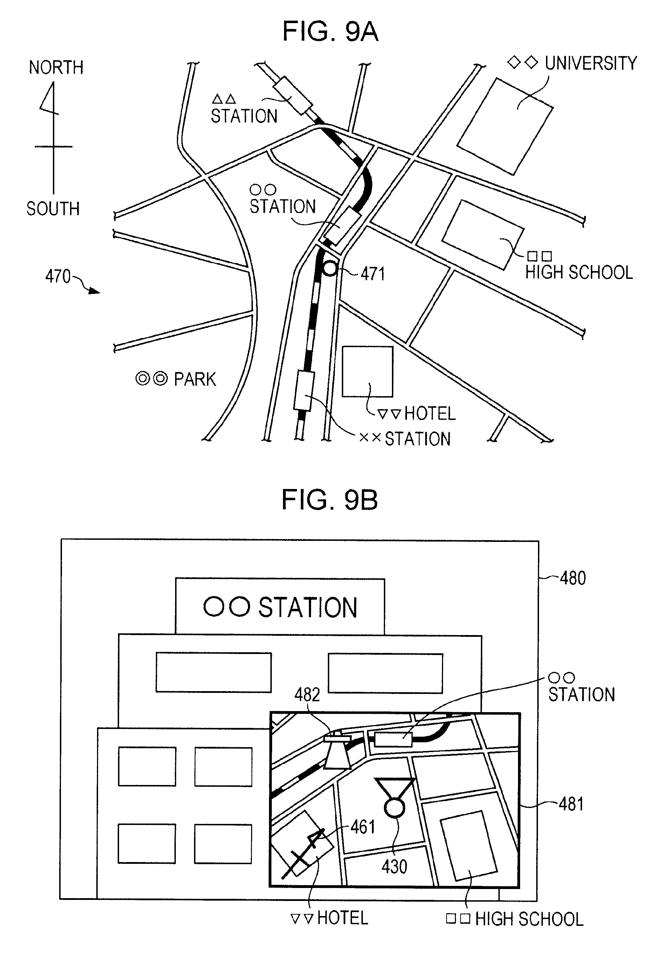

The display controlling unit 250 causes the display unit 260 to display the captured image output from the image-capturing unit 211 and the map corresponding to the converted map data output from the map data converting unit 230. In addition, the display controlling unit 250 causes the display unit 260 to display the image-capturing state confirmation image corresponding to the image-capturing range output from the image-capturing range calculating unit 240 on a map in a superimposing manner. Furthermore, the display controlling unit 250 causes the display unit to display the image with the size of the map changed according to an operation input from the operation receiving unit 270. Example of such display will be described in detail with reference to Figs. 8A, 8B, 9A, and 9B. In addition, the display controlling unit 250 corresponds to the system controlling unit 140 shown in Fig. 1.

The display unit 260 is a display unit for displaying each kind of images based on the control of the display controlling unit 250. The display unit 260 corresponds to the display unit 170 shown in Fig. 1.

The operation receiving unit 270 is an operation receiving unit for receiving an operation input from a user, and outputs the operation content according to the received operation input to the display controlling unit 250 or record controlling unit 280. For example, the operation receiving unit 270 outputs the operation content to the display controlling unit 250 when an operation directing the setting of the monitoring mode is received. In addition, the operation receiving unit 270 outputs the operation content to the display controlling unit 250 and record controlling unit 280, for example, when an operation of instructing recording of a moving image is received. Furthermore, the operation receiving unit 270 outputs the operation content to the record controlling unit 280, for example, when a operation instructing the recording of a still image (in other words, a shutter operation). In addition, the operation receiving unit 270 corresponds to the manipulating unit 150 shown in Fig. 1.

The record controlling unit 280 causes the content storing unit 290 to record the captured image output from the image-capturing unit 211 as still image content or moving image content. In addition, the record controlling unit 280 causes the content management information storing unit 300 to record each piece of information output from the image-capturing position information acquiring unit 212, image-capturing direction information acquiring unit 213, and camera information acquiring unit 214 by associating the information with still image content and moving image content. For example, the record controlling unit 280 causes the content storing unit 290 to record the captured image output from the image-capturing unit 211 as moving image content when the operation receiving unit 270 receives a operation instructing the recording of a moving image. With the recording, the record controlling unit 280 causes the content management information storing unit 300 to record each piece of information (image-capturing position information, image-capturing direction information, angle-of-view information, and depth information) with respect to each frame including the moving image content. When the moving image is recorded, each piece of information may be recorded for each frame, and the content management information storing unit 300 may be made to record each piece of information for each uniform interval (for example, for each of Group of Pictures (GOP)). Furthermore, the record controlling unit 280 causes the content storing unit 290 to record the captured image output from the image-capturing unit 211 as still image content, for example, when the operation receiving unit 270 receives a operation instructing the recording of the still image. With the recording, the record controlling unit 280 causes the content management information storing unit 300 to record each piece of information (image-capturing position information, image-capturing direction information, angle-of-view information, and depth information) with respect to the still image content. In addition, the record controlling unit 280 corresponds to the system controlling unit 140 shown in Fig. 1.

The content storing unit 290 records the captured image output from the image-capturing unit 211 as still image content or moving image content based on the control of the record controlling unit 280. In addition, the content storing unit 290 corresponds to the recording unit 160 shown in Fig. 1.

The content management information storing unit 300 records each piece of information output from the image-capturing position information acquiring unit 212, image-capturing direction information acquiring unit 213, and camera information acquiring unit 214 by associating the information with the captured image based on the control of the record controlling unit 280. Furthermore, the content management information storing unit 300 corresponds to the recording unit 160 shown in Fig. 1. In addition, the content management information storing unit 300 is an example of the representative image storing unit described in the claims of the present invention.

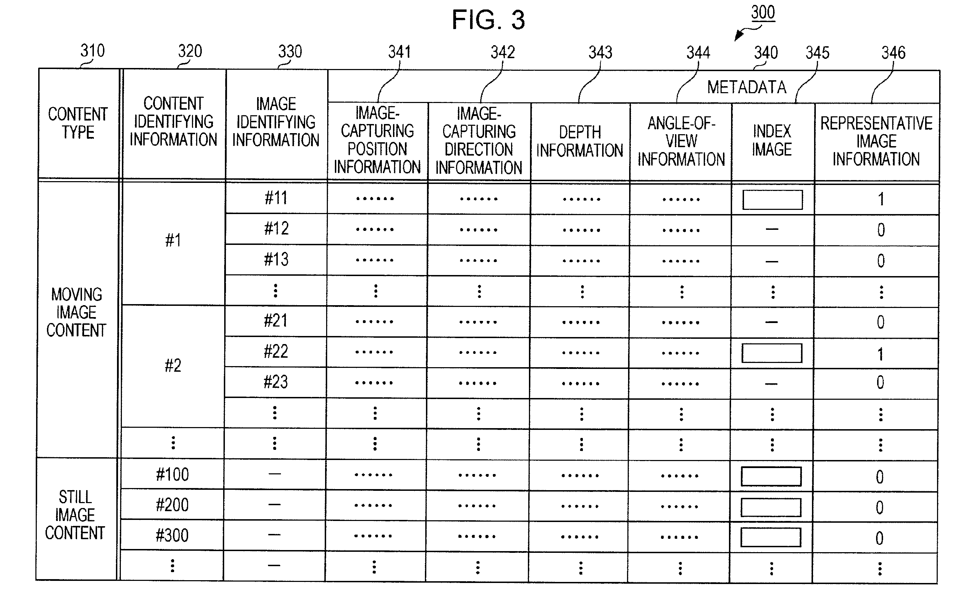

Fig. 3 is a diagram schematically illustrating stored content of the content management information storing unit 300 according to the first embodiment of the present invention. The content management information storing unit 300 stores metadata 340 by classifying for the types of content (moving image content and still image content). Specifically, in the field of content type 310 of "moving image content", content identifying information 320, image identifying information 330, and metadata 340 are stored by associating with each other. In addition, in the field of content type 310 of "still image content", the content identifying information 320 and the metadata 340 are stored by associating with each other.

The content identifying information 320 is information for identifying each of the content, and for example, "#1" and "#2" are accommodated therein as content identifying information relating to moving image content. In addition, "#100", "#200", and "#300" are accommodated therein as content identifying information relating to still image content.

The image identifying information 330 is information for identifying each captured image (frame) including moving image content, and for example, "#11", "#12", and "#13" are accommodated for each captured image including moving image content corresponding to the content identifying information 320 of "#1". In addition, in the image identifying information 330, identifying information is accommodated only for a captured image of which information is accommodated in the metadata 340.

The metadata 340 is metadata relating to each captured image, and image-capturing position information 341, image-capturing direction information 342, depth information 343, angle-of-view information 344, index image 345, and representative image information 346 are accommodated as the metadata. In addition, in Fig. 3, information accommodated in the image-capturing position information 341, image-capturing direction information 342, depth information 343, and angle-of-view information 344 is omitted and the index image accommodated in the index image 345 is simplified in a rectangle shape.

The image-capturing position information 341 is information including an image-capturing position (for example, latitude and longitude) when the corresponding image is captured, and accommodates image-capturing position information acquired by the image-capturing position information acquiring unit 212.

The image-capturing direction information 342 is information including the image-capturing direction (for example, an azimuth when the image-capturing position is a base position) when the corresponding image is captured, and accommodates the image-capturing direction information acquired by the image-capturing direction information acquiring unit 213.

The depth information 343 is depth information calculated for the corresponding captured image, and accommodates the depth information acquired by the camera information acquiring unit 214.

The angle-of-view information 344 is angle-of-view information calculated for the corresponding captured image, and accommodates the angle-of-view information acquired by the camera information acquiring unit 214.

The index image 345 is an index image (representative image) used when the corresponding content is selected, and accommodates, for example, a thumbnail image of the corresponding captured image. The thumbnail image is generated, for example, by the record controlling unit 280.

The representative image information 346 is information for specifying a captured image determined as a representative image in each of the captured images including the corresponding moving image content. In Fig. 3, in each of the captured images including the moving image content, the field of the captured image determined as the representative image is given with "1", and the field of other captured image is given with "0". Here, in case of the moving image content, the index image is accommodated in the index image 345 only for 1 which is given for the determined representative image and a plurality of captured images. As a method of determining a representative image, for example, a method can be used in which a captured image when a GPS signal is received first after an operation of recording moving image content is started is determined as a representative image. For example, in each of the captured images including moving image content corresponding to the content identifying information 320 of "#1", the captured image corresponding to the image identifying information 330 of "#11" is determined as a representative image, and an index image is accommodated in the index image 345 for the captured image. In addition, the method of determining a representative image described above is an example, and a method can be used which determines a representative image by selecting one image according to a certain rule from moving image content. For example, a method may be used which determines a head image of moving image content as a representative image.

Furthermore, in this example, an example of storing metadata in a content management information storing unit is shown, but for example, the metadata may be stored in each of content files.

### Example of Display Control of Map

Figs. 4A and 4B are diagrams schematically illustrating part of map data stored in the map data storing unit 200 and an image-capturing operation in a region corresponding to the map data according to the first embodiment of the present invention. A map 400 shown in Fig. 4A is a map showing a region corresponding to part of the map data stored in the map data storing unit 200. In addition, in Figs. 4A and 4B, north is assumed to be in the direction of the upper side. Moreover, it is assumed that there are, for example, ΔΔ Station, ○○ Station, XX Station, 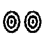 Park, ◇◇ University, □□ High School, and VV Hotel in the region corresponding to the map 400.

Fig. 4B schematically shows a case when a user performs an image-capturing operation by using the image-capturing apparatus 100 in a region 410 corresponding to the map 400 shown in Fig. 4A. For example, in an image-capturing position 411 in a region 410, the user performs the image-capturing operation in a state where an image-capturing direction 412 of the image-capturing apparatus 100 is directed toward "○○ Station" (in other words, capturing an image of "○○ Station" as the main object).

Figs. 5A and 5B are diagrams schematically illustrating a method of calculating a rotation angle used in conversion processing of the map data by the map data converting unit 230 according to the first embodiment of the present invention.

Fig. 5A shows an angle θ1 formed by a north direction 413 and the image-capturing direction 412 in the region 410 shown in Fig. 4B. Fig. 5B shows the image-capturing apparatus 100, the image-capturing position 411, the image-capturing direction 412, and the north direction 413 shown in Fig. 5A, and the angle θ1 formed by the image-capturing direction 412 and the north direction 413 within a dot-lined circle 414. In addition, in the outer circumference of the circle 414, azimuths (the north, south, east and west) are shown in the case where the image-capturing position 411 is assumed to be the base position. Moreover, in the first embodiment of the present invention, an example in which the map data converting unit 230 performs conversion processing of map data by using the angle θ1 formed by the image-capturing direction 412 and the north direction 413 when the north direction 413 is 0 degree as a rotation angle. The value of the angle θ1 is calculated by the map data converting unit 230 based on the image-capturing direction information acquired by the image-capturing direction information acquiring unit 213.

Figs. 6A and 6B are diagrams schematically illustrating a region as a display target (display target region) from the map data stored in the map data storing unit 200 according to the first embodiment of the present invention. Fig. 6A shows a rectangle 420 with dotted lines in which the image-capturing position 411 is a center in the map 400. The size of the rectangle 420 is assumed to be the same as the size of the display target region. In addition, a line segment that passes the center position (image-capturing position 411) of the rectangle 420 and is parallel with the north-south direction is a line segment 415.

Fig. 6B shows a rectangle 421 in thick dotted lines formed by rotating the rectangle 420 at the angle θ1 with the image-capturing position 411 as a center. When an image-capturing operation is performed by the image-capturing apparatus 100 in the state shown by Fig. 4B, the region included in the rectangle 421 (a region where there are ○○ Station, □□ High School, and ∇∇ Hotel) is the display target region in the map 400. Here, the long side of the rectangle 421 is in parallel with the image-capturing direction 412. In addition, in the first embodiment of the present invention, the region included in the rectangle 421 is displayed so that the long side coming into contact with the tip of the arrow indicating the image-capturing direction 412 is positioned in the upper side of the display screen in the display unit 260. An example of the display will be shown in Fig. 8B.

Figs. 7A and 7B are diagrams schematically illustrating a method of creating an image-capturing state confirmation image superimposed on a map corresponding to the map data converted by the map data converting unit 230 according to the first embodiment of the present invention. The region 410 shown in Fig. 7A is the same as the region 410 shown in Fig. 5A. In this example, in the state of image-capturing operation shown in Fig. 7A, the image-capturing range calculating unit 240 is assume to calculate an angle of view θ11 and a depth value d11 based on the angle-of-view information and depth information acquired by the camera information acquiring unit 214. In addition, the angle of view θ11 corresponds to the angle of view of the captured image generated by the image-capturing unit 211, and the depth value d11 can be calculated by multiplying the value specified by the depth information (distance to an object) by a certain value.

Fig. 7B shows an image-capturing state confirmation image 430 created based on the angle of view θ11 and depth value d11 calculated by the image-capturing range calculating unit 240. The image-capturing state confirmation image 430 is an operation supporting image indicated by displaying the image-capturing range in diagram form, and displayed on a map in an overlapping manner. The image-capturing state confirmation image 430 is formed from the image-capturing position image 431 and image-capturing range image 432.

The image-capturing position image 431 is an image in a circular shape indicating the image-capturing position of the image-capturing apparatus 100 on a map.

The image-capturing range image 432 is an image in isosceles triangle shape indicating the image-capturing range of the image-capturing apparatus 100 on the map, and the apex angle thereof is included in the image-capturing position image 431. In addition, in the image-capturing range image 432, the apex angle is the angle of view θ11 and the distance from the bottom side to the image-capturing position image 431 is the depth value d11. Accordingly, the user can easily find the outline of the image-capturing range corresponding to the angle-of-view information and depth information acquired by the camera information acquiring unit 214 by the isosceles triangle. Furthermore, the size of the image-capturing range image 432 of the image-capturing state confirmation image 430 may be made to be enlarged or reduced according to the enlargement or reduction, for example, when the user manipulates the map to be enlarged or reduced.

Figs. 8A and 8B are diagrams illustrating an example of displaying the captured image and the map displayed in the display unit 260 according to the first embodiment of the present invention. The Fig. 8A shows the captured image 450 generated by the image-capturing unit 211. The captured image 450 is a captured image generated by the image-capturing unit 211 in a state of the image-capturing operation shown in Fig. 4B. In other words, in the example shown in Fig. 4B, the image-capturing operation is performed with "○○ Station" as the main object, and accordingly the station building of the "○○ Station" is included in the captured image 450.

Fig. 8B shows an image 451 provided with a map display region 460 on the captured image 450 shown in Fig. 8A. In the map display region 460, for example, a map is displayed which corresponds to a display target region (region included in the rectangle 421 shown in Fig. 6B) specified when the image-capturing operation shown in Fig. 4B is performed. In addition, on the map displayed in the map display region 460, the image-capturing state confirmation image 430 and a map symbol 461 are displayed in an overlapping manner.

The image-capturing state confirmation image 430 is an image-capturing state confirmation image created by the method shown in Fig. 7B. The image-capturing state confirmation image 430 is displayed so that, for example, the image-capturing position image 431 is arranged in the center position in the map display region 460 and the bottom side of the image-capturing range image 432 is placed in the upper side of the vertical direction in the display unit 260.

The map symbol 461 is a map symbol indicating the north, south, east and west and arranged according to the north, south, east and west directions on the map displayed in the map display region 460. In the example shown in Fig. 8B, the direction from "∇∇ Hotel" to "○○ Station" is north, and thereby the symbol is arranged according to the direction. Accordingly, the direction can be easily recognized for the map displayed by being rotated according to the image-capturing direction.

Furthermore, in the display example shown in Fig. 8B, an example is shown in which the map display region 460 is displayed in the right lower part of the image 451, but the map display region 460 may be displayed in other part of the image 451. In addition, the display position of the map display region 460 may be changed by manual operation of the user.

Here, a method of creating the image 451 shown in Fig. 8B will be described. For example, the captured image 450 is generated by the image-capturing unit 211 in a state of image-capturing operation shown in Fig. 4B. In addition, in that state, the image-capturing position 411 where the image-capturing apparatus 100 exists is specified based on the image-capturing position information output from the image-capturing position information acquiring unit 212. Furthermore, the map data acquiring unit 220 acquired the map data from the map data storing unit 200 based on the longitude and latitude specified by the image-capturing position 411, and outputs the data to the map data converting unit 230. The map data as a target of acquisition is, for example, map data that include at least a region in a circle having the diagonal line of the display target region in a rectangular shape (for example the rectangles 420 and 421 shown in Fig. 6B) as the diameter.

Subsequently, the map data converting unit 230 converts the map data output from the map data acquiring unit 220 based on the image-capturing position information output from the image-capturing position information acquiring unit 212 and the image-capturing direction information output from the image-capturing direction information acquiring unit 213. Then, the converted map data is output to the display controlling unit 250. As a method of converting the map data, for example, the affine transformation can be used for converting positions of 2 points by using a 3X3 matrix (affine matrix) on a 2-dimensional coordinate. Specifically, the map data converting unit 230 has the longitude and latitude specified by the image-capturing position 411 as a rotation base, and performs the affine transformation for each value of the map data output from the map data acquiring unit 220. In the affine transformation, conversion is performed in which the map corresponding to the map data output from the map data acquiring unit 220 is rotated by θ1 degree. The map data converted by the affme transformation is output to the display controlling unit 250. This example described that the map data output from the map data acquiring unit 220 is converted and the map corresponding to the converted map data is used as the display target region. However, for example, the map corresponding to the map data output from the map data acquiring unit 220 may be drawn with a drawing buffer, and the display target area may be used by being taken out from the drawn map. For example, a taking-out frame (a frame having the same size as the display target region) in the map drawn with the drawing buffer is set, the taking-out frame is rotated by θ1 degree, and thereby the map included in the rotated taking-out frame can be used as the display target region.

Subsequently, the display controlling unit 250 draws the map corresponding to the converted map data output from the map data converting unit 230 in the map display region 460 in the captured image 450, and displays the image 451 in which the map is drawn in the display unit 260. In this case, the display controlling unit 250 displays the map so that the longitude and latitude specified by the image-capturing position 411 is the center position of the map display region 460. In addition the display controlling unit 250 causes the image-capturing state confirmation image 430 and the map symbol 461 to be displayed by being drawn in an overlapping manner on the map drawn in the map display region 460.

The captured image in which the map display region is set is displayed, for example when the monitoring mode is set or during recording of the moving image. In addition, the captured image may be displayed according to operation instruction from the operation receiving unit 270. Furthermore, the map displayed in the map display region 460 can be enlarged or reduced, and moved in a desired direction, for example, according to an operation instruction from the operation receiving unit 270.

As such, by displaying the map so that the object side in the image-capturing direction of the image-capturing apparatus 100 is the upper side in the display plane of the display unit 260, the user performing the image-capturing operation with the image-capturing apparatus 100 can easily grasp the current image-capturing direction on the map.

Hereinabove, an example in which the image-capturing state confirmation image 430 and the map symbol 461 are displayed in an overlapping manner in the map display region within the captured image, but, for example, an image indicating a landmark or the like that exists on the map as a display target may be displayed in an overlapping manner.

Figs. 9A and 9B are diagrams illustrating an example of displaying part of the map data stored in map data storing unit 200 and a captured image and a map displayed in the display unit 260 according to the first embodiment of the present invention. Fig. 9A shows a map 470 in which a landmark 471 is added to the map 400 shown in Fig. 4A. In addition, a landmark is a building or the like which serves as a feature icon or a symbol such as Tokyo Tower, Kyoto Tower, or the like.
Superimposed data relating to the landmark is stored, for example, in the map data storing unit 200 together with the map data, by being associated with the position.

Fig. 9B shows an example of displaying the image 480 overlapped with the landmark image 482 in the map display region 481 in the display unit 260. In addition, the image 480 is the same as the image 451 shown in Fig. 8B except that the landmark image 482 is displayed in an overlapping manner. For this reason, same portions are given with the same reference numerals and description thereof will not be repeated.

The landmark image 482 is an image of which characteristics of the landmark displayed in a diagram form, and for example, when the landmark 471 is a building such as Kyoto Tower, the external appearance of the landmark is displayed as an image in a diagram form as shown in Fig. 9B.

For example, the display control unit 250 draws the landmark image 482 on the map corresponding to the converted map data output from the map data converting unit 230, and the image 480 in which the landmark image 482 is drawn is displayed in the display unit 260. Furthermore, only the landmark image relating to the landmark included in the image-capturing range calculated by the image-capturing range calculating unit 240 may be displayed on the map. In addition, the landmark included in the image-capturing range and the landmark not included in the image-capturing range may be displayed on the map as difference display forms so that each of the landmark images can be distinguished.

As such, by displaying the landmark image in a position corresponding to the position on the map where an image is also displayed in an overlapping manner, the user can easily recognize if there is a landmark within the current image-capturing range or around the image-capturing range. Accordingly, it is possible to prevent missing the best photographic opportunity to have the landmark as a photographic object in the vicinity of the landmark.

Hereinabove, an example is shown in which the map is displayed on the captured image generated by an image-capturing operation in an overlapping manner when the monitoring mode is set or during recording of the moving image (in other words, in a state where the user performs the image-capturing operation by using the image-capturing apparatus 100). Hereinafter, an example will be shown in which a map is displayed on an image corresponding to content in an overlapping manner by using the metadata 340 (shown in Fig. 3) stored in the content management information storing unit 300 when the content recorded by an image-capturing operation are reproduced.

### Example of Functional Composition of Image-capturing Apparatus

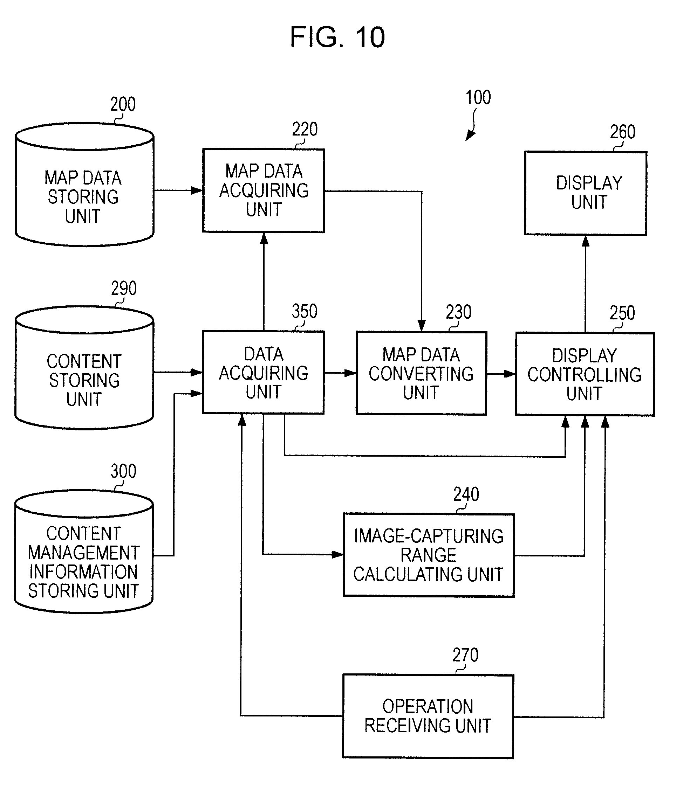

Fig. 10 is a block diagram illustrating an example of a functional composition of the image-capturing apparatus 100 according to the first embodiment of the present invention. The example shown in Fig. 10 is an example of a functional composition relating to the reproduction of the image-capturing apparatus 100, and a modified example of the functional composition shown in Fig. 2. For this reason, portions common in those in the functional composition shown in Fig. 2 are give with the same reference numerals and description thereof will not be repeated, and portions different from those of the functional composition shown in Fig. 2 will mainly be described. The image-capturing apparatus 100 is provided with the map data storing unit 200, map data acquiring unit 220, map data converting unit 230, and image-capturing range calculating unit 240. In addition, the image-capturing apparatus 100 is also provided with the display controlling unit 250, display unit 260, operation receiving unit 270, content storing unit 290, content management information storing unit 300, and a data acquiring unit 350.

The map data acquiring unit 220 acquires map data from the map data storing unit 200 based on image-capturing position information output from the data acquiring unit 350, and outputs the acquired map data to the map data converting unit 230.

The map data converting unit 230 converts the map data output from the map data acquiring unit 220 based on the image-capturing position information and image-capturing direction information output from the data acquiring unit 350, and outputs the converted map data to the display controlling unit 250.

The image-capturing range calculating unit 240 calculates the image-capturing range based on angle-of-view information and depth information output from the data acquiring unit 350, and outputs the calculated image-capturing range to the display controlling unit 250.

The data acquiring unit 350 acquires data stored in the content storing unit 290 or the content management information storing unit 300 according to operation input received from the operation receiving unit 270, and supplies the acquired data to each of the units.

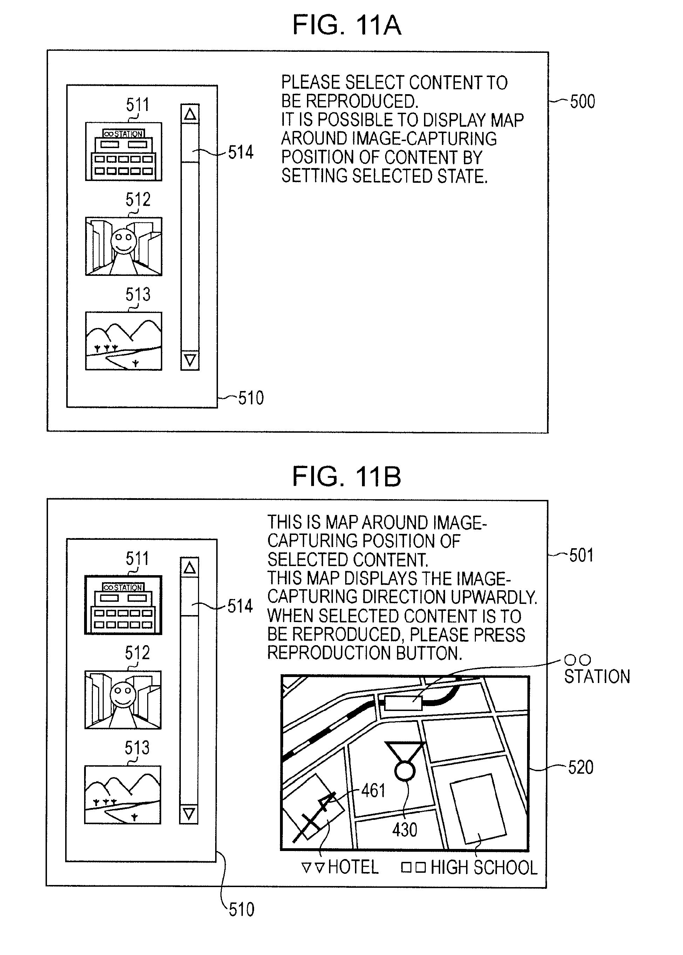

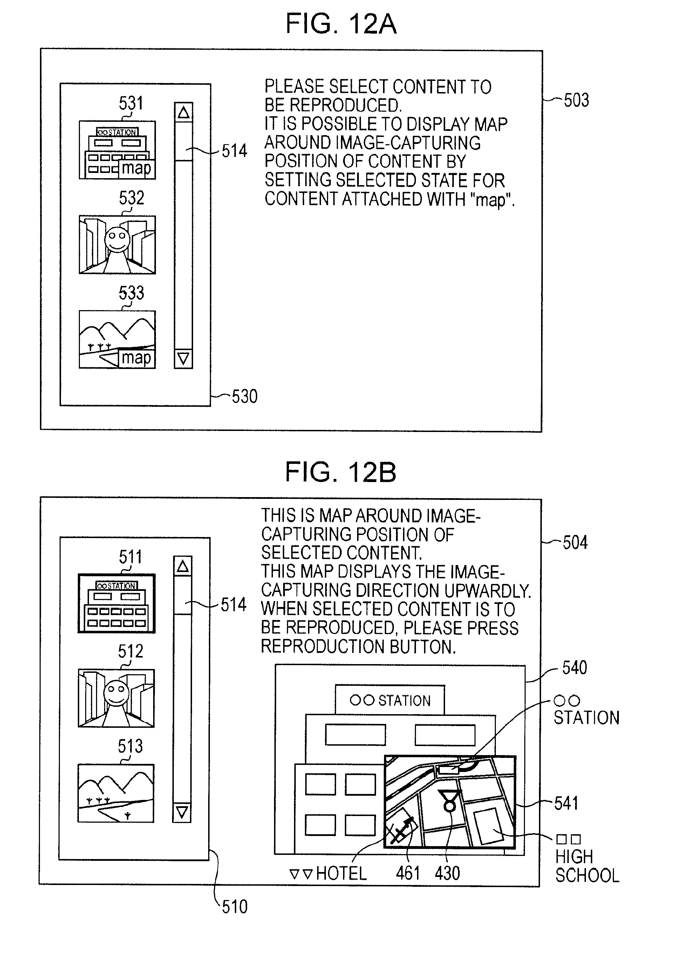

Specifically, when the operation receiving unit 270 receives operation instructing the display of a content selection screen, the data acquiring unit 350 sequentially acquires the index mage 345 (shown in Fig. 3) of the content management information storing unit 300 and outputs to the display controlling unit 250. Then, the display controlling unit 250 causes the display unit 260 to display the content selection screen (shown in Figs. 11A, 11B, 12A, and 12B) including a view of index images for selecting content.

In addition, when the operation receiving unit 270 receives selection operation in the content selection screen, the data acquiring unit 350 acquires the metadata 340 (shown in Fig. 3) stored in the content management information storing unit 300 by being associated with the selected index image. Furthermore, the data acquiring unit 350 outputs image-capturing position information in the acquired metadata to the map data acquiring unit 220, outputs the image-capturing position information and image-capturing direction information to the map data converting unit 230, and outputs the depth information and angle-of-view information to the image-capturing range calculating unit 240. The display controlling unit 250 causes a map display region in the content selection screen to display the map in which the image-capturing state confirmation image and map symbol are superimposed, based on the map data output from the map data converting unit 230 and the image-capturing range output from the image-capturing range calculating unit 240.

In addition, when the operation receiving unit 270 receives operation instructing the reproduction of the content selected in the content selection screen, the data acquiring unit 350 acquires the content corresponding to the index image in a selected state from the content storing unit 290. In addition, the data acquiring unit 350 acquires the metadata 340 stored in the content management information storing unit 300 by associating with the acquired content. Moreover, the data acquiring unit 350 outputs image-capturing position information in the acquired metadata to the map data acquiring unit 220, outputs the image-capturing position information and image-capturing direction information to the map data converting unit 230, and outputs depth information and angle-of-view information to the image-capturing range calculating unit 240. In addition, the data acquiring unit 350 outputs the acquired content to the display controlling unit 250. The display controlling unit 250 causes to sequentially display the content output from the data acquiring unit 350. In addition, the display controlling unit 250 causes the display of the map superimposed with the image-capturing state confirmation image and map symbol together with the content based on the map data output from the map data converting unit 230 and the image-capturing range output from the image-capturing range calculating unit 240. Furthermore, such display examples will be described in detail with respect to Figs. 11A to 13B. In addition, the data acquiring unit 350 corresponds to the system controlling unit 140 shown in Fig. 1.

### Example of Display Control of Map

Figs. 11A, 11B, 12A, and 12B are diagrams illustrating display examples of the content selection screen displayed in the display unit 260 according to the first embodiment of the present invention.

Fig. 11A shows a content selection screen 500 for selecting content as a reproduction target when the content stored in the content storing unit 290 are reproduced. The content selection screen 500 is provided with an index image display region 510 for display index images for selecting the content. In the index image display region 510, index images 511 and 513 stored in the index image 345 of the content management information storing unit 300 are displayed. In addition, by moving a scroll bar 514 in the upper and lower direction, the index image displayed in the index image display region 510 is moved in the upper and lower direction, and thereby other index images can be displayed, based on operation inputs by the operation receiving unit 270.

Fig. 11B shows a display example (content selection screen 501) when the operation receiving unit 270 receives selection operation for selecting the index image 511 on the content selection screen 500 shown in Fig. 11A. In the content selection screen 501 shown in Fig. 11B, the index image 511 in a selected state is shown by a thick frame. As such, the map corresponding to the index image 511 in a selected state on the content selection screen 501 is displayed in a map display region 520. The map displayed in the map display region 520 and the image-capturing state confirmation image 430 and the map symbol 461 superimposed on the map are the same ones as those shown in Fig. 8B, and therefore description thereof will not be repeated.

As such, the object in the image-capturing direction during the image-capturing is displayed in the upper side in the display plane of the display unit 260 on the map corresponding to the index image in a selected state on the content selection screen, and thereby the user can easily grasp the image-capturing direction during the image-capturing. Accordingly, it is possible to easily grasp the position at which the content is recorded and image-capturing direction during that time, and thereby, the user can easily acquire information for making geographical decisions when the content is selected.

Figs. 11A and 11B show an example in which only an index image is displayed in the index image display region 520. However, it can be presumed a case where there are content stored not in associated with the metadata for display the map. Therefore, hereinbelow, an example will be shown in which an index image is displayed so that content stored in association with the metadata can be easily grasp.

Fig. 12A shows a display example in which an index image corresponding to content in association with the metadata for display the map is attached with characters "map" that indicate the fact. For example, in the index image display region 530 shown in Fig. 12A, the content corresponding to index images 531 and 533 are assumed to be stored in association with the metadata for display the map. On the other hand, the content corresponding to an index image 532 are assumed to be stored in association with the metadata for displaying the map. In this case, as shown in Fig. 12A, the index images 531 and 533 are displayed with overlapping with the characters "map", and the index image 532 is displayed without the character "map". Accordingly, it is possible to easily grasp whether the content is stored in association with the metadata for displaying the map or not.

In addition, Fig. 11B shows an example in which the map in which the image-capturing state confirmation image and map symbols are superimposed with each other is displayed in the content selection screen 501. However, for example, the corresponding content may be displayed with the map in which the image-capturing state confirmation image and map symbols are superimposed with each other.

Fig. 12B shows a display example in which a content display region 540 is provided at the position of the map display region 520 shown in Fig. 11B. The content display region 540 is displayed with an image corresponding to the content (an enlarged index image or an image including the content), and the map display region 541 is provided on the image. Furthermore, the image and map displayed in the content display region 540 are the same as those in Fig. 8B except for the size of the image 451. With the display as described above, it is possible to easily grasp the display form during reproduction.

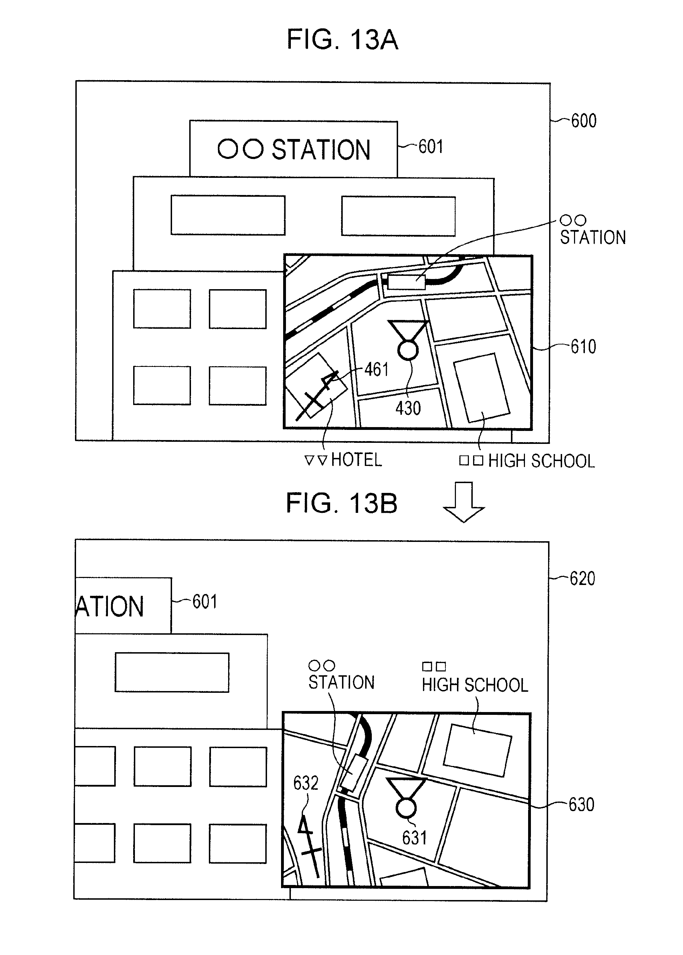

Figs. 13A and 13B are diagrams illustrating examples of playing back content in the display unit 260 according to the first embodiment of the present invention. Figs. 13A and 13B show transition of an image when moving image content recorded when the image-capturing apparatus 100 is panned in the right side in the state shown in Fig. 4B are reproduced. In addition, an image 600 shown in Fig. 13A is the same as the image 451 shown in Fig. 8B.

For example, when the image-capturing apparatus 100 is panned in the right side in the state shown in Fig. 4B, a station building 601 of "○○ Station" included in the captured image is moved in the opposite side to the panning direction within the captured image as shown in Figs. 13A and 13B. In addition, even when such operation of panning is performed, the metadata (image-capturing position information, image-capturing direction information, depth information, and angle-of-view information) corresponding to the state of the image-capturing operation can be sequentially recorded in the content management information storing unit 300. For this reason, for example, when recorded moving image content is reproduced as the panning operation is performed, the map is displayed based on the metadata corresponding to the state of the image-capturing operation. Accordingly, for example, when the recorded moving image content is reproduced while the panning operation is performed from the state shown in Fig. 13A to the state shown in Fig. 13B, the map subjected to rotation processing according to the panning operation is displayed in a map display region 630. In addition, on the map in the map display region 630, a map symbol 632 rotated according to the rotation processing is displayed and an image-capturing state confirmation image 631 is displayed. As such, according to the state of image-capturing operation of an image corresponding to content in reproduction, the map, image-capturing state confirmation image, and map symbol displayed in a map display region are sequentially changed and displayed.

Here, it is presumed that, for example, when moving image content is recorded while frequently moving, the metadata (image-capturing position information, image-capturing direction information, depth information, and angle-of-view information) for display the map are sequentially recorded in the content management information storing unit 300 at a uniform interval. When the moving image content is reproduced, it is presumed that an angle of a map or the like is frequently changed if a map is sequentially rotated and displayed based on the metadata. If the angle of the map or the like is frequently changed as above, the user may have difficulty in reading the map. Therefore, for example, when the angle of rotation corresponding to the metadata does not exceed the threshold value, the rotation processing is not performed for the map, but only when the angle of the rotation exceeds the threshold value, the rotation processing may be performed.

In addition, it is presumed that, when content not in association with the metadata (image-capturing direction information) for converting the map are reproduced, other metadata (image-capturing position information, depth information, and angle-of-view information) are associated with the content. During the reproduction of such content, for example, it is possible to display an image-capturing state confirmation image or a landmark image on the map.

### Example of Operation of Image-capturing Apparatus

Next, the operation of the image-capturing apparatus 100 according to the first embodiment of the present invention will be described with reference to accompanying drawings.

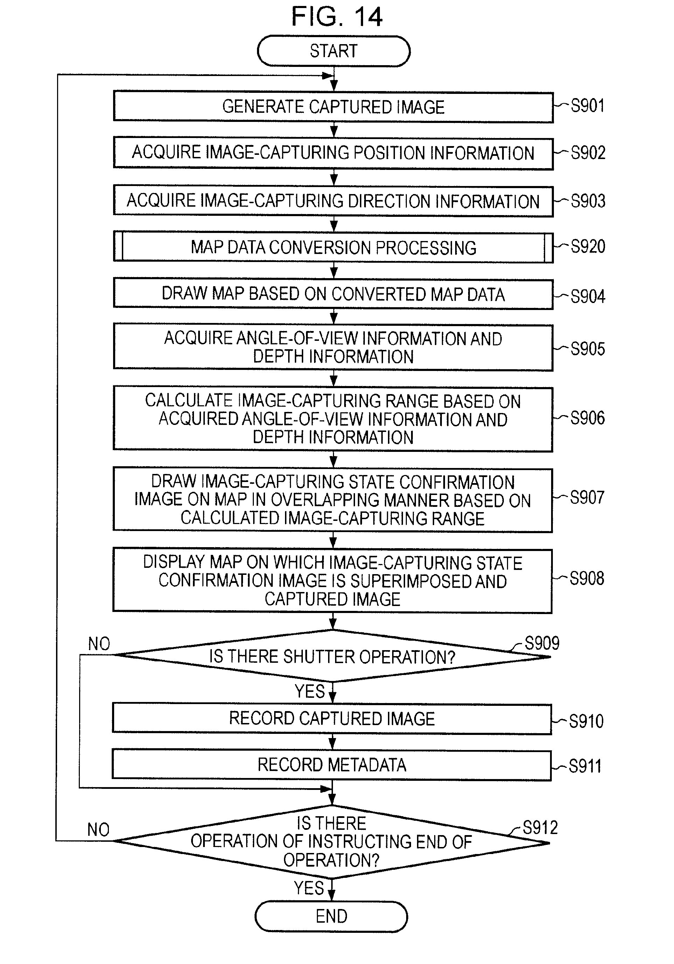

Fig. 14 is a flowchart illustrating procedures of a map display control processing by the image-capturing apparatus 100 according to the first embodiment of the present invention. In this example, an example will be described in which a map is displayed on a captured image in an overlapping manner when the monitoring mode for recording a still image is set. In addition, the scale of a map is assumed to be designated according to the operation of a user.

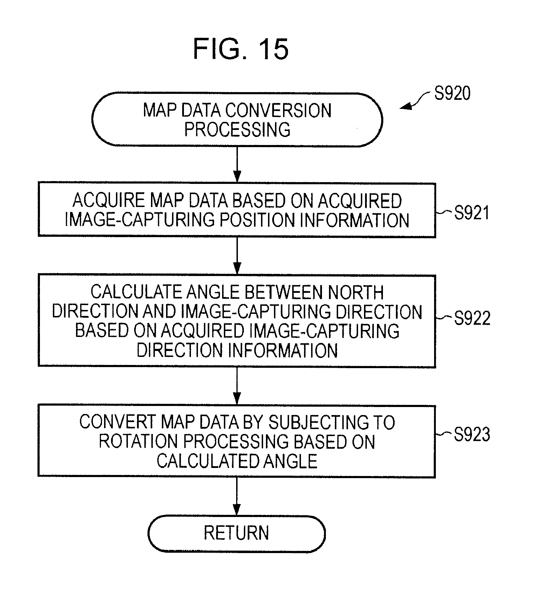

At first, the image-capturing unit 211 generates a captured image (Step S901). Subsequently, the image-capturing position information acquiring unit 212 acquires image-capturing position information (Step S902), and the image-capturing direction information acquiring unit 213 acquires image-capturing direction information (Step S903). In addition, Step S903 is an example of image-capturing direction acquiring process described in claims of the present invention. Subsequently, a map data conversion processing is performed (Step S920). In addition, Step S920 is an example of a converting process described in claims of the present invention. The map data conversion processing will be described in detail with reference to Fig. 15. Subsequently, the display controlling unit 250 draws a map corresponding to map data based on the map data converted by the map data conversion processing (Step S904). In this case, a map symbol (for example, the map symbol 461 shown in Fig. 8B) is drawn on the map.

Subsequently, the camera information acquiring unit 214 acquires angle-of-view information and depth information (Step S905), and the image-capturing range calculating unit 240 calculates the image-capturing range based on the acquired angle-of-view information and depth information (Step S906).

Subsequently, the display controlling unit 250 draws an image-capturing state confirmation image on the map in an overlapping manner based on the calculated image-capturing range (Step S907). Next, the display controlling unit 250 causes the display unit 260 to display the map on which the image-capturing state confirmation image is superimposed and the captured image (Step S908). In addition, Step S908 is an example of a display control processing described in claims of the present invention.

Subsequently, it is determined whether operation of pressing the shutter button is performed or not (Step S909). When the operation of pressing the shutter button is performed (Step S909), the record controlling unit 280 causes the content storing unit 290 to record the generated captured image as still image content (Step S910). Next, the record controlling unit 280 causes the content management information storing unit 300 to record the acquired image-capturing position information, image-capturing direction information, angle-of-view information, and depth information as the metadata of the still image content (Step S911). On the other hand, when the operation of pressing the shutter button is not performed (Step S909), the process advances to Step S912.

Subsequently, it is determined whether operation of instruction for instructing the end of an operation (monitoring mode) is performed or not (Step S912), and when the operation of instruction for instructing the end of the operation is performed, the operation of map display control processing is ended. On the other hand, when the operation of instruction for instructing the end of the operation is not performed (Step S912), the process returns to Step S901.

Fig. 15 is a flowchart illustrating the map data conversion processing (procedures of Step S920 shown in Fig. 14) in the procedures of the map display control processing by the image-capturing apparatus 100 according to the first embodiment of the present invention.

At first, the map data acquiring unit 220 acquires map data from the map data storing unit 200 based on the image-capturing position information acquired by the image-capturing position information acquiring unit 212 (Step S921). Subsequently, the map data converting unit 230 calculates the angle between the north direction and the image-capturing direction based on the image-capturing direction information acquired by the image-capturing direction information acquiring unit 213 (Step S922). Next, the map data converting unit 230 performs conversion of the map data by subjecting the map data acquired from the map data storing unit 200 to a rotation processing based on the calculated angle (Step S923).

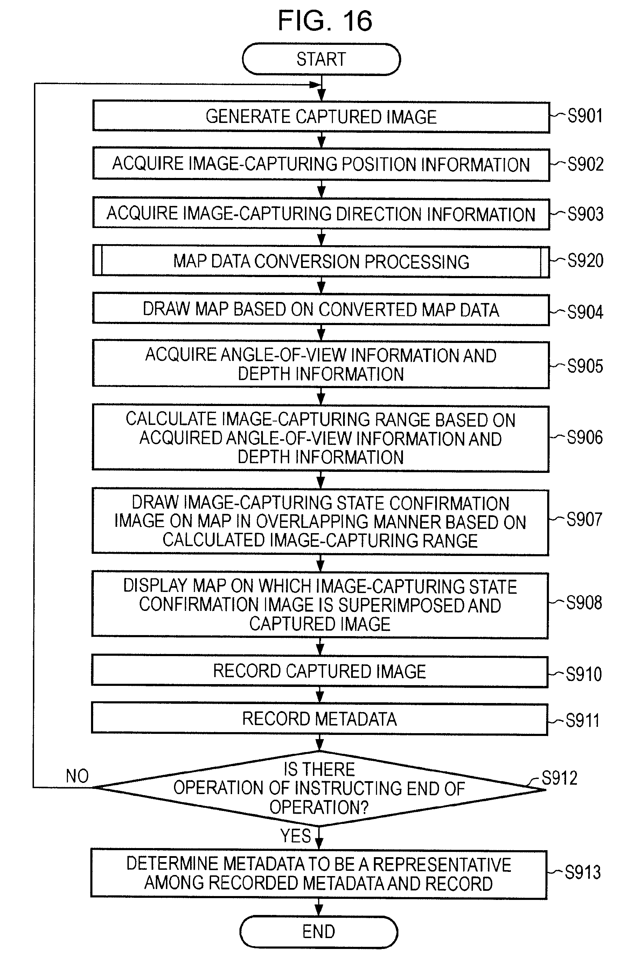

Fig. 16 is a flowchart illustrating procedures of the map display control processing by the image-capturing apparatus 100 according to the first embodiment of the present invention. This example is a modified example of the map display control processing shown in Fig. 14, and is of displaying a map on the captured image in an overlapping manner during the recording of a moving image. For this reason, portions same as those in the procedures shown in Fig. 14 are given with the same reference numerals and description thereof will not be repeated.

Since the procedures are performed during the recording of the moving image, the record controlling unit 280 causes the content storing unit 290 to sequentially record the generated captured image (frame) as moving image content (Step S910). In addition, the record controlling unit 280 causes the content management information storing unit 300 to record the acquired image-capturing position information, image-capturing direction information, angle-of-view information, and depth information as metadata of the captured image (Step S911). The record of the metadata may be performed for each frame, and for a predetermined interval.

In addition, when operation of instruction for instructing the end of an operation (record of the moving image) is performed (Step S912), the record controlling unit 280 determines a representative image from among captured images of which metadata are recorded in the content management information storing unit 300 during the record of the moving image (Step S913). In addition, the record controlling unit 280 records the determination for the representative image in the representative image information 346 (shown in Fig. 3) for the captured image determined as the representative image (Step S913).

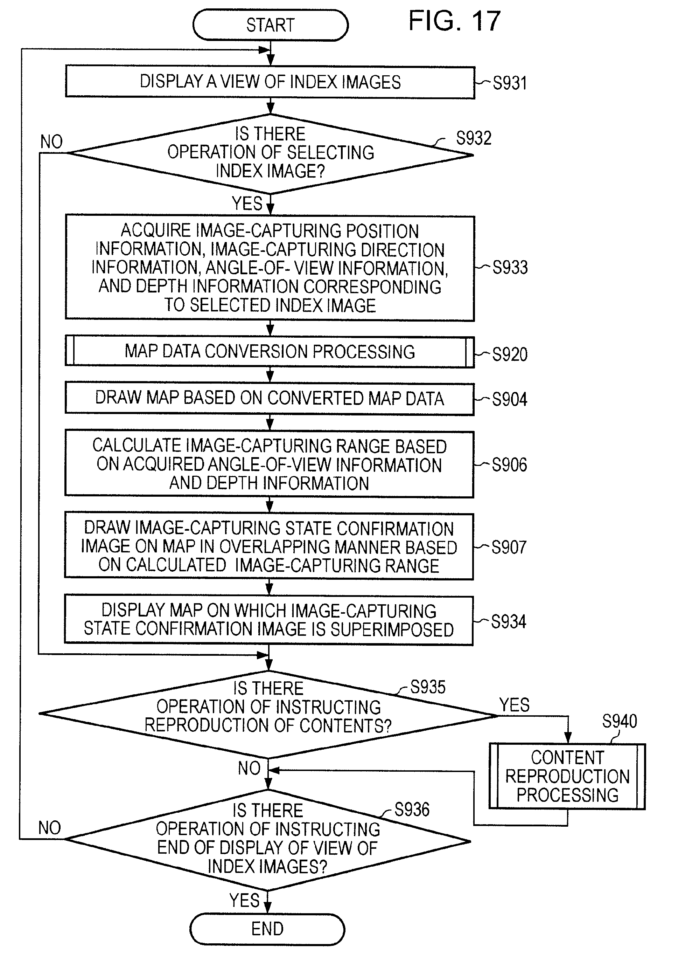

Fig. 17 is a flowchart illustrating procedures of a map display control processing by the image-capturing apparatus 100 according to the first embodiment of the present invention. The example is a modified example of the map display control processing shown in Fig. 14, and is of displaying a map with an index image in the content selection screen (shown in Figs. 11A, 11B, 12A, and 12B). For this reason, portions same as those in the procedures in Fig. 14 are be given with the same reference numerals the description thereof will not be repeated.

At first, the display controlling unit 250 acquired index images stored in the content management information storing unit 300 and displays a view of the index images on the content selection screen (Step S931). The content selection screen is displayed, for example, by operation of a user.

Subsequently, it is determined whether selection operation for selecting an index image displayed on the content selection screen is received or not (Step S932). When the selection operation for selecting an index image is not received (Step S932), the process advances to Step S935. On the other hand, when the selection operation for selecting an index image is received (Step S932), the data acquiring unit 350 acquires the metadata stored in the content management information storing unit 300 in association with the selected index image (Step S933). In addition, Step S933 is an example of an image-capturing direction acquiring process described in claims of the present invention.

Subsequently, a map data conversion processing is performed based on the acquired metadata (image-capturing position information and image-capturing direction information) (Step S920). Next, an image-capturing state confirmation image is drawn on the map in an overlapping manner by using the acquired metadata (angle-of-view information and depth information) (Steps S904, 906, and 907). Subsequently, the display controlling unit 250 causes the display unit 260 to display the map on which the image-capturing state confirmation image is superimposed (Step S934). For example, the map on which the image-capturing state confirmation image is superimposed is displayed in the map display region 520 (shown in Fig. 11B) on the content selection screen. In addition, Step S934 is an example of a display control processing described in claims of the present invention.

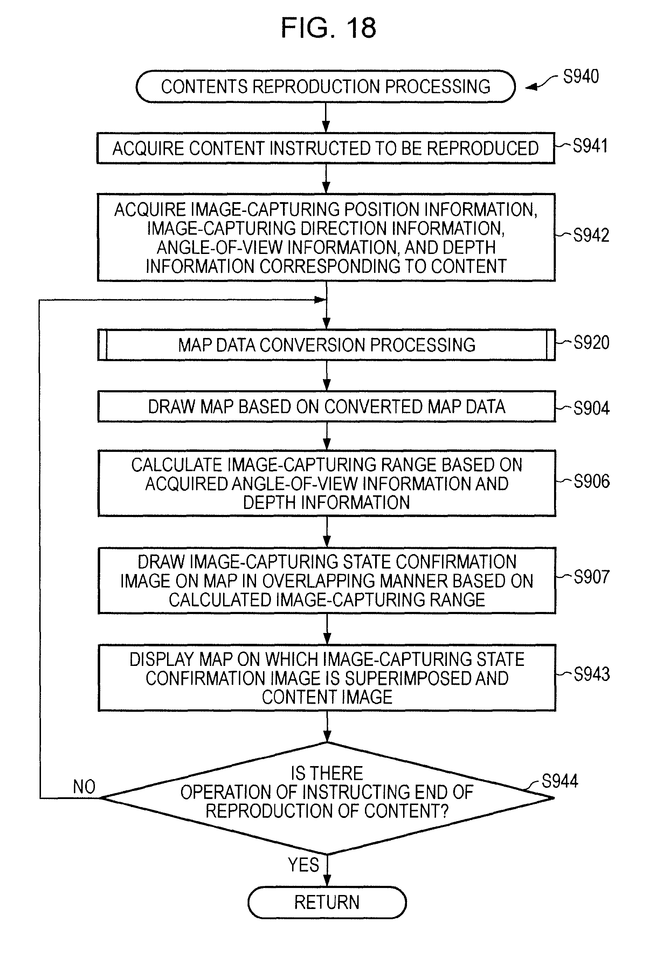

Subsequently, it is determined whether operation instructing the reproduction of the content is performed or not (Step S935), and when the operation instructing the reproduction of the content is performed, a content reproduction processing is performed for the content corresponding to the index image in a selected state (Step S940). The content reproduction processing will be described in detail wit reference to Fig. 18. On the other hand, when the operation instructing the reproduction of the content is not performed (Step S935), it is determined whether an operation instructing the end of the display of the content selection screen is performed or not (Step S936). When the operation instructing the end of the display of the content selection screen is performed (Step S936), the operation of the map display control processing is ended. On the other hand, when an operation instructing the end of the display of the content selection screen is not performed (Step S936), the process returns to Step S931.

Fig. 18 is a flowchart illustrating a content reproduction processing (procedures of Step S940 shown in Fig. 17) in the procedures of the map display control processing by the image-capturing apparatus 100 according to the first embodiment of the present invention. The example is a modified example of the map display control processing shown in Fig. 14 and is of displaying the map in an overlapping manner on the image corresponding to the content instructed to be reproduced. For this reason, portions same as those in the procedures shown in Fig. 14 are given with the same reference numerals and description thereof will not be repeated.

At first, the data acquiring unit 350 acquires the content instructed to be reproduced from the content storing unit 290 (Step S941), and acquires the metadata stored in the content management information storing unit 300 in association with the content (Step S942). In addition, Step S942 is an example of an image-capturing direction acquisition processing described in claims of the present invention.

Subsequently, the map data conversion processing is performed based on the acquired metadata (image-capturing position information and image-capturing direction information) (Step S920). Next, the image-capturing state confirmation image is drawn on the map in an overlapping manner by using the acquired metadata (angle-of-view information and depth information) (Steps S904, 906, and 907). Subsequently, the display controlling unit 250 causes the display unit 260 to display the map on which the image-capturing state confirmation image is superimposed and the image corresponding to the acquired content (Step S943). Here, when the content instructed to be reproduced is the moving image content, for example, the map data conversion processing, the drawing processing of the image-capturing state confirmation image on the map and the like are sequentially performed for each frame including the moving image content. In addition, when the content instructed to be reproduced is the still image content, for example, the map data conversion processing, the drawing processing of the image-capturing state confirmation image on the map and the like are performed only once for one still image content. In addition, Step S943 is an example of a display control processing described in claims of the present invention.

Subsequently, it is determined whether an operation instructing the end of the content reproduction is performed or not (Step S944), and when the operation instructing the end of the content reproduction is performed, the operation of the content reproduction processing is ended. On the other hand, when the operation instructing the end of the content reproduction is not performed (Step S944), the process returns to Step S920.

### Second Embodiment

The first embodiment of the present invention described the example of displaying a map in a planar form (2-dimensional map). However, for example, even when a map with three-dimensional image (three-dimensional map) is displayed, the first embodiment of the present invention can be applied thereto. The three-dimensional map is a map on which a three-dimensional space on the map is projected on a plane and displayed. Hereinbelow, an example of displaying the three-dimensional map will be described in detail with reference to accompanying drawings.

### Example of Composition of Image-capturing Apparatus

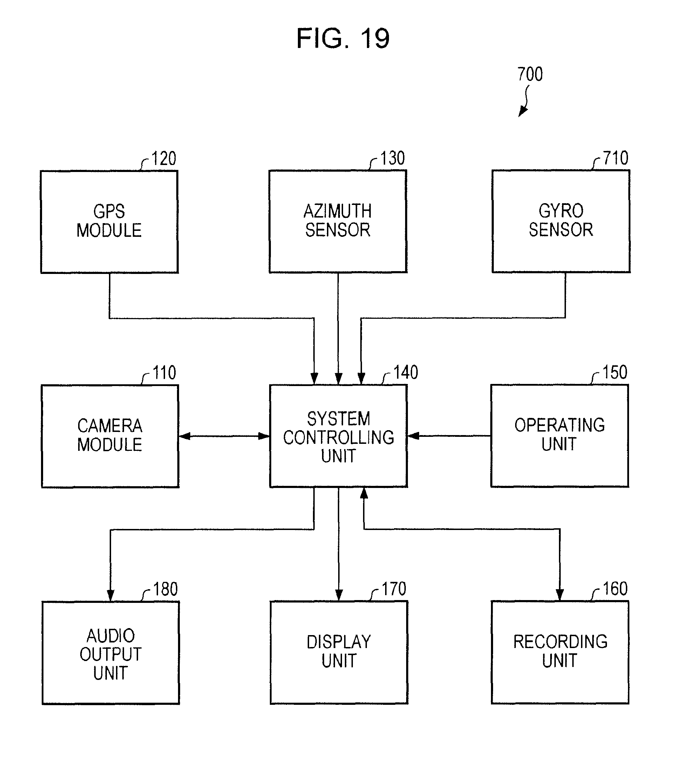

Fig. 19 is a block diagram illustrating an example of an internal composition of an image-capturing apparatus 700 according to a second embodiment of the present invention. Here, the image-capturing apparatus 700 is a modified example of the image-capturing apparatus 100 shown in Fig. 1, portions common with the image-capturing apparatus 100 are given with the same reference numerals and description thereof will not be repeated, and description of the apparatus will be provided mainly for different portions from those of the image-capturing apparatus 100. The image-capturing apparatus 700 is provided with a gyro sensor 710.

The gyro sensor 710 is an angular speed sensor detecting angular speed around 3 axes perpendicular to one another, and outputs the detected angular speed to the system controlling unit 140.

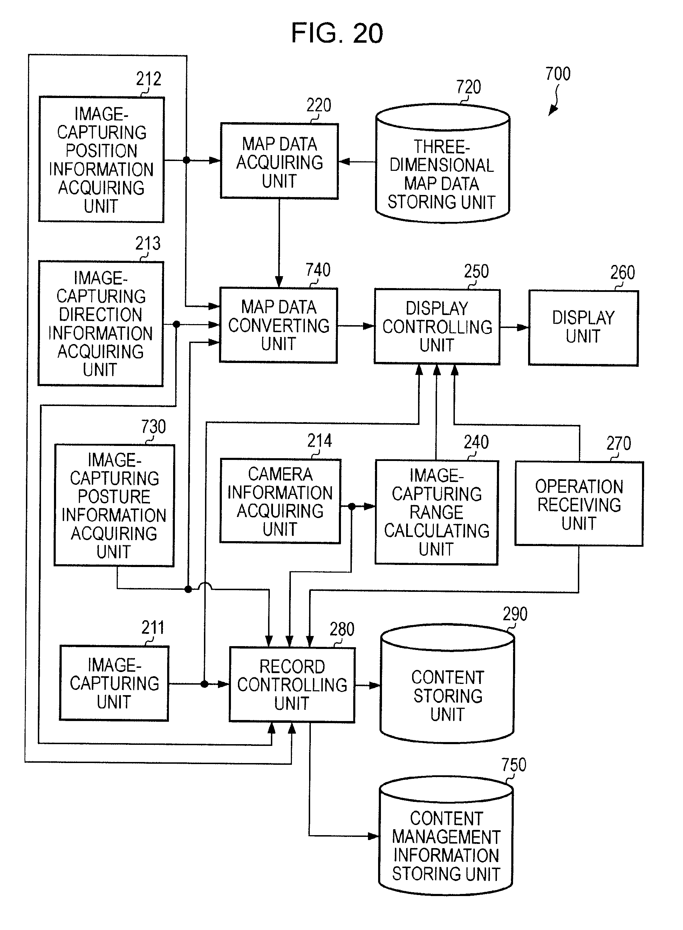

Fig. 20 is a block diagram illustrating an example of a functional composition of the image-capturing apparatus 700 according to the second embodiment of the present invention. Here, the image-capturing apparatus 700 is a modified example of the image-capturing apparatus 100 shown in Fig. 2, and therefore, portions common in the image-capturing apparatus 100 are given with the same reference numerals and description thereof will not be repeated, but mainly different portions from the image-capturing apparatus 100 will be described. The image-capturing apparatus 700 is provided with a three-dimensional map data storing unit 720, an image-capturing posture information acquiring unit 730, a map data converting unit 740, and a content management information storing unit 750. Here, the image-capturing apparatus 700 is different from the first embodiment of the present invention in that the apparatus displays a three-dimensional map instead of displaying a 2-dimensional map, and a display aspect in the vertical direction of the three-dimensional map is changed based on image-capturing posture information (for example, a movement amount in the vertical direction by a tilting operation). Therefore, hereinbelow, points different from the first embodiment of the present invention will mainly be described and points common in the first embodiment will not be repeated.

The three-dimensional map data storing unit 720 stores three-dimensional map data for displaying a three-dimensional map in the display unit 260, and supplies the stored three-dimensional map data to the map data acquiring unit 220. In addition, the three-dimensional map data storing unit 720 corresponds to the recording unit 160 shown in Fig. 19.

The image-capturing posture information acquiring unit 730 acquires image-capturing posture information relating to a posture in the state of image-capturing operation of the image-capturing apparatus 700, and outputs the acquired image-capturing posture information to the map data converting unit 740 and record controlling unit 280. The image-capturing posture information is a rotation angle calculated based on angular speed detected by the gyro sensor 710, and for example, is a rotation angle of a pitch axis when a user performing image-capturing operation by using the image-capturing apparatus 700 is the center of rotation. In addition, the image-capturing posture information acquiring unit 730 corresponds to the gyro sensor 710 shown in Fig. 19.

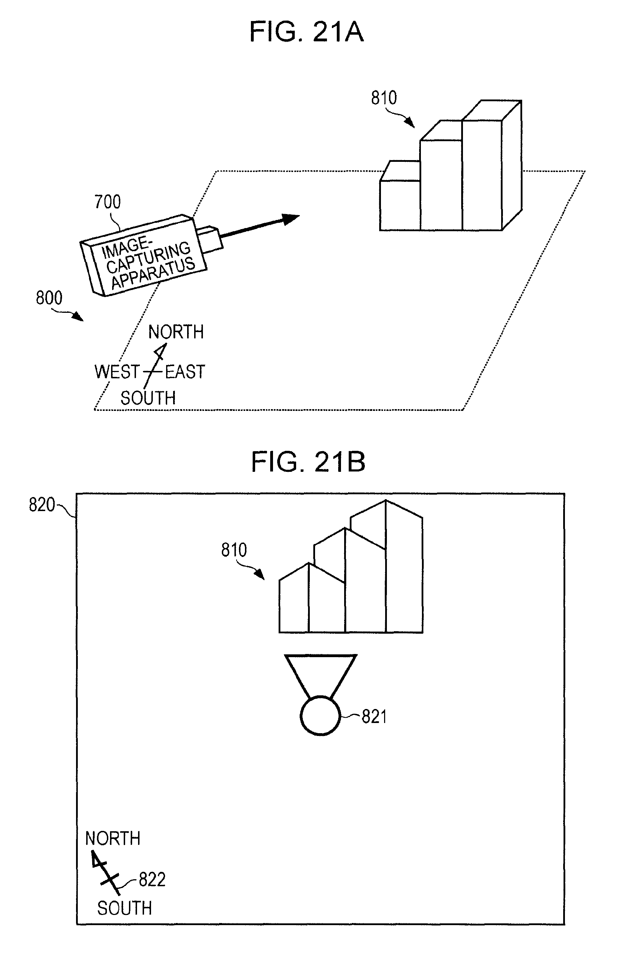

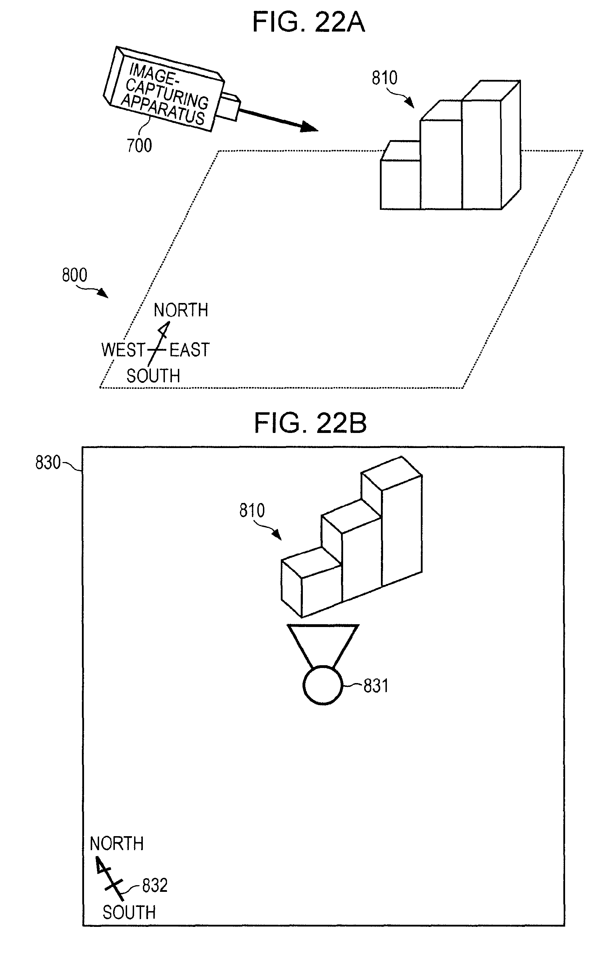

The map data converting unit 740 converts the three-dimensional map data output from the map data acquiring unit 220 based on image-capturing direction information output from the image-capturing direction information acquiring unit 213 and image-capturing posture information output from the image-capturing posture information acquiring unit 730. In addition, the map data converting unit 740 outputs the converted three-dimensional map data to the display controlling unit 250. Moreover, an altitude in the three-dimensional map corresponding to the three-dimensional map data is specified by using an altitude included in the image-capturing position information acquired by the image-capturing position information acquiring unit 212. In addition, the conversion of the three-dimensional map data will be described in detail with respect to Figs. 21A, 21B, 22A, and 22B.

The content management information storing unit 750 records the image-capturing posture information output from the image-capturing posture information acquiring unit 730 in association with a captured image based on the control of the record controlling unit 280. Furthermore, each of information output from the image-capturing position information acquiring unit 212, image-capturing direction information acquiring unit 213, and camera information acquiring unit 214 is recorded in association with the captured image in the same way as in the first embodiment of the present invention. In other words, the image-capturing posture information is additionally recorded as the metadata 340 shown in Fig. 3. In addition, the content management information storing unit 750 corresponds to the recording unit 160 shown in Fig. 19.

### Example of Display Control of Map

Figs. 21A, 21B, 22A, and 22B are diagrams illustrating a state of image-capturing operation of the image-capturing apparatus 700 and a three-dimensional map displayed in that state according to the second embodiment of the present invention. Figs. 21A and 22A show in a simplified manner a state of capturing an image of the surroundings of a building group 810 by the image-capturing apparatus 700 on a region 800 where the building group 810 exists. Here, the building group 810 is assumed to be formed of 3 buildings standing in one row in the east-west direction. In addition, in Fig. 21A, it is assumed that image-capturing operation is performed in a state that the image-capturing direction of the image-capturing apparatus 700 is the north-east direction and that the image-capturing direction of the image-capturing apparatus 700 is a direction looking up the rooftop of the building group 810 on the region 800. In addition, in Fig. 22A, it is assumed that the image-capturing operation is performed in a state that the image-capturing direction of the image-capturing apparatus 700 is the north-east direction and that the image-capturing direction of the image-capturing apparatus 700 is a direction looking down the rooftop of the building group 810 on the region 800.

Fig. 21B shows a three-dimensional map 820 displayed in the display unit 260 when the image-capturing operation of the image-capturing apparatus 700 is performed in the state shown in Fig. 21A. Fig. 22B shows a 3-dimensinal map 830 displayed in the display unit 260 when the image-capturing operation of the image-capturing apparatus 700 is performed in the state shown in Fig. 22A. The map data converting unit 740 converts three-dimensional map data so that the image-capturing direction in the three-dimensional map corresponding to the three-dimensional map data output from the map data acquiring unit 220 and a specific direction in the display unit 260 correspond with each other. With the conversion, the map data converting unit 740 converts the three-dimensional map data according to a rotation angle specified by the image-capturing posture information output from the image-capturing posture information acquiring unit 730 having the image-capturing position as a base position. For example, when the image-capturing operation of the image-capturing apparatus 700 is performed in the state shown in Fig. 21A, the data is converted to display the three-dimensional map in a way of looking up the rooftop of the building group 810 as shown in Fig. 21B. In addition, when the image-capturing operation of the image-capturing apparatus 700 is performed in the state shown in Fig. 22A, the data is converted to display the three-dimensional map in a way of looking down the rooftop of the building group 810 as shown in Fig. 22B. In addition, in the same manner as in the first embodiment of the present invention, a captured image relating to the three-dimensional map is displayed together with the three-dimensional map shown in Figs. 21B and 22B.

As such, a three-dimensional map is modified and displayed according to the movement of the image-capturing apparatus 700 in the vertical direction. In addition, in the same manner as in the first embodiment of the present invention, the captured image and the three-dimensional map are displayed in the display unit 260 so that the image-capturing direction in the three-dimensional map and a specific direction in the display unit 260 correspond with each other. In addition, image-capturing state confirmation images 821 and 831, and map symbols 822 and 832 are drawn on the three-dimensional map in the same manner as in the first embodiment of the present invention. Furthermore, this example shows that the same image-capturing state confirmation image as that of a 2-dimensional map is displayed, but for example, an image indicating a three-dimensional image-capturing range may be displayed as an image-capturing state confirmation image. In addition, this example describes only display control when content is recorded, but the display control can be applied also to a case where the recorded content is reproduced in the same manner.

As described above, according to the embodiments of the present invention, a map including the image-capturing position during the image-capturing can be displayed in association with a captured image, and therefore, it is possible to easily grasp the relationship of geographical position of the displayed captured images. When the map is displayed, it is possible to set the image-capturing direction during the capturing of the map to be the upper side of the display unit in the vertical direction, and therefore, it is possible to intuitively grasp the positional relationship of buildings or the like with respect to the direction for performing actual image-capturing operation. For example, when during the image-capturing, the north of a map is displayed to be the upper side of the display unit in the vertical direction, it is necessary to check the map while being aware of the orientation of an image-capturing apparatus on the map, but according to the embodiments of the present invention, it is not necessary to be aware of the orientation of the image-capturing apparatus.

In addition, content or an index image can be displayed in association with a map including the image-capturing position during the image-capturing in the same way during the reproduction of the content, and therefore, it is possible to easily grasp the relationship of geographical position of the displayed images. Furthermore, the image-capturing direction during the image-capturing of a map can be displayed to be the upper side of the display unit in the vertical direction, and therefore, it is possible to reproduce the content while intuitively grasping the positional relationship of buildings or the like with respect to the direction for performing actual image-capturing operation.

In addition, since an image-capturing state confirmation image can be displayed on a map, it is possible to easily check the image-capturing range during the image-capturing on the map. In other words, it is possible to intuitively grasp not only the positional relationship of buildings or the like with respect to the direction for performing an actual image-capturing operation but also the image-capturing range.

In addition, the image-capturing direction during the image-capturing of a three-dimensional map can be displayed to be the upper side of the display unit in the vertical direction in the same manner when an image and the three-dimensional map relating to the image are displayed. For this reason, it is possible to intuitively grasp the positional relationship of three-dimensional buildings or the like with respect to the direction for performing an actual image-capturing operation.

In addition, the embodiments of the present invention can be applied to electronic devices capable of displaying a map, such as mobile phones with image-capturing function, personal computers, car navigation systems, or the like. In addition, the embodiments of the present invention also can be applied to electronic devices capable of displaying content and a map relating thereto on other display units by outputting the content and the map relating thereto to the display unit.

Furthermore, an embodiment of the present invention is an example for realizing the present invention, and the embodiment has corresponding relationship with each of specific invention items in claims of the present invention as described above. However, the present invention is not limited to the above embodiments, and can be subjected to various modifications within the range not departing from the gist of the present invention.

In addition, the procedures described in the embodiments of the present invention can be understood as a method having such a series of procedures, and can be understood as a program for making a computer execute a series of the procedures and a recording medium for storing the program. As such a recording medium, for example, a compact disc (CD), a MiniDisc (MD), a digital versatile disk (DVD), a memory card, a Blu-ray disc (registered trademark), or the like can be used.

The present application contains subject matter related to that disclosed in Japanese Priority Patent Application JP 2009-102525 filed in the Japan Patent Office on April 21, 2009, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An electronic apparatus comprising:
an image-capturing direction acquiring unit that acquires an image-capturing direction as a direction in which an object included in a captured image exists based on an image-capturing position during the image-capturing of the captured image;
a converting unit that converts a map including the image-capturing position so that the acquired image-capturing direction on the map corresponds with a specific direction on a display plane where the map is displayed; and
a display controlling unit that causes the display of the converted map in association with the captured image.

2. The electronic apparatus according to Claim 1, further comprising:
a representative image storing unit that stores representative images indicating content formed from the captured image for each of the content; and
an operation receiving unit that receives selection operation for selecting a desired representative image from among the representative images stored in the representative image storing unit;
wherein the converting unit performs conversion of the map including the image-capturing position during the image-capturing of the selected representative image among the representative images stored in the representative image storing unit; and
wherein the display controlling unit causes the display of a view of the representative images stored in the representative image storing unit and the display of the converted map in association with the selected representative image among the displayed representative images.

3. The electronic apparatus according to Claim 1 or 2, wherein
the converting unit performs the conversion of the map for each of the captured images including content corresponding to the selected representative image instructed to be reproduced when the reproduction of the content is instructed; and
the display controlling unit causes the display of the converted map in association with captured images for each of the captured images including the content instructed to be reproduced.

4. The electronic apparatus according to Claim 1, 2 or 3, further comprising:
an image-capturing unit that generates the captured images;
wherein, whenever the captured images are generated, the converting unit performs the conversion for the map including the image-capturing position during the image-capturing of each of the generated captured images; and
wherein, whenever the captured images are generated, the display controlling unit causes the display of the converted map in association with the each of the generated captured images.

5. The electronic apparatus according to one of the Claims 1 to 4, further comprising:
a content storing unit that stores moving image content included with the captured images;
wherein the converting unit performs the conversion of the map for each of the captured images including the moving image content instructed to be reproduced when the reproduction of the moving image content is instructed; and
wherein the display controlling unit causes the display of the converted map in association with captured images for each of the captured images including the moving image content.

6. The electronic apparatus according to one of the Claims 1 to 5, wherein the converting unit converts the map by rotating the map, taking the image-capturing position as the center of rotation so that the acquired image-capturing direction and the specific direction correspond with each other on the map.

7. The electronic apparatus according to one of the Claims 1 to 6, wherein
the map is a three-dimensional map which is formed of a three-dimensional captured image by projecting a three-dimensional space on the map including the image-capturing position onto a plane;
the converting unit converts the three-dimensional map so that the acquired image-capturing direction on the three-dimensional map and a specific direction in a display plane where the three-dimensional map is displayed correspond with each other; and
the display controlling unit causes the display of the converted three-dimensional map in association with the captured image.

8. The electronic apparatus according to one of the Claims 1 to 7, wherein the display controlling unit causes the display of the map by being superimposed on the captured image.

9. The electronic apparatus according to one of the Claims 1 to 8, wherein the image-capturing direction acquiring unit acquires the direction of an object existing in the center position of the captured image as an image-capturing direction based on the image-capturing position.

10. The electronic apparatus according to one of the Claims 1 to 9, further comprising:
angle-of-view and depth information acquiring units that acquire angle-of-view information and depth information during the image-capturing;
wherein the display controlling unit causes the display of a captured image of an image-capturing range indicating the image-capturing range specified by the acquired angle-of-view information and depth information by being superimposed on the image-capturing position on the map.

11. A display controlling method comprising the steps of:
acquiring an image-capturing direction as a direction in which an object included in a captured image exists based on an image-capturing position during the image-capturing of the captured image;
converting a map including the image-capturing position so that the acquired image-capturing direction on the map corresponds with a specific direction on a display plane where the map is displayed; and
causing the display of the converted map in association with the captured image.

12. A program causing a computer to perform procedures comprising:
acquiring an image-capturing direction as a direction in which an object included in a captured image exists based on an image-capturing position during the image-capturing of the captured image;
converting a map including the image-capturing position so that the acquired image-capturing direction on the map corresponds with a specific direction on a display plane where the map is displayed; and
causing the display of the converted map in association with the captured image.
